# EUROPEAN PATENT SPECIFICATION

(11) **EP 3 466 646 B1**
(45) Date of publication and mention of the grant of the patent: **13.10.2021**
(21) Application number: 17802686.0
(22) Date of filing: 19.05.2017
(51) Int. Cl.: B29C 64/112, B29C 64/386, B29C 64/209, B33Y 10/00, B33Y 30/00, B33Y 50/00, B33Y 80/00, A61K 9/20

(54) **SHAPING DEVICE AND SHAPING METHODS**
FORMGEBUNGSVORRICHTUNG UND FORMGEBUNGSVERFAHREN
DISPOSITIF DE FAÇONNAGE ET PROCÉDÉS DE FAÇONNAGE

(30) Priority: 23.05.2016 JP 2016102515; 28.12.2016 JP 2016255010
(43) Date of publication of application: 10.04.2019
(73) Proprietor: Mimaki Engineering Co., Ltd., Tomi-City, Nagano 389-0512 (JP)
(72) Inventor: OHI, Hiroyoshi, Tomi-city Nagano 398-0512 (JP); HAKKAKU, Kunio, Tomi-city Nagano 398-0512 (JP)
(74) Representative: Horn Kleimann Waitzhofer Patentanwälte PartG mbB
(86) International application number: PCT/JP2017/018765
(87) International publication number: WO 2017/204094

(56) References cited:
- EP-A2- 1 558 440
- JP-A- H0 788 967
- JP-A- 2013 043 338
- JP-A- 2015 217 670
- JP-A- 2016 068 320
- JP-A- 2016 068 320
- US-A1- 2010 195 122
- US-A1- 2016 129 640

## Description

### TECHNICAL FIELD

The present invention relates to building apparatuses according to claims 1, 2, and 3, and to building methods according to claims 7, 8 and 9.

### BACKGROUND ART

In the related art, there is known a building apparatus (3D printer) that builds an object using an inkjet head (for example, refer to JP 2015-71282 A). In such a building apparatus, the object is built through additive manufacturing by layering a plurality of layers of ink formed by the inkjet head.

US 2016/0129640 A1 provides a three-dimensional object formation apparatus. The three-dimensional object has a second layer provided between a first and third layer.

US 2010/0195122 and EP 1 558 440 A0 disclose related art.

### SUMMARY OF INVENTION

### Technical Problem

In a case of building an object using an inkjet head, an object colored in various colors can be built by using ink for coloring as a building material. The object can be variously decorated by drawing a design such as various characters or graphics on a surface of the object. In a case of building the object colored in such a way, it can be considered that a light-reflective region (for example, a white region) is formed inside the object, and a colored region is formed around a circumference thereof. With this configuration, various colors can be represented similarly to a case of performing printing on a white sheet and the like at the time of printing by an inkjet printer that prints a two-dimensional image.

However, in a case of coloring the object, various problems may be caused due to a difference in conditions from those in a case of performing printing on a plane sheet and the like. Thus, in the related art, there has been a demand for building the colored object more appropriately by the building apparatus.

JP 2015-147326 A according to the application of the present inventors is a literature disclosing a building method for forming a colored region around a light-reflective region. JP 2015-147326 A proposes a configuration in which a transparent region is arranged between the light-reflective region and the colored region to isolate the light-reflective region from the colored region so as to solve the problem that ink is mixed at an interface between the light-reflective region and the colored region and desired decoration cannot be implemented in some cases.

In the object described above, visible light reflected by the light-reflective region inside the object passes through the colored region, and various colors can be represented on a principle of subtractive color mixing. However, to represent many colors equal to or larger than 10,000,000 colors with high definition in the object, for example, it is found that, through research and development carried out by the inventors, it is not sufficient to simply isolate the light-reflective region from the colored region in some cases.

In view of the background described above, the present invention provides a building method that enables high-definition color building.

### SOLUTIONS TO THE PROBLEMS

The inventors of the present invention paid attention to different points between a case of building objects having various three-dimensional shapes with a building apparatus and a case of printing a two-dimensional image with an inkjet printer. More specifically, in a case of building a colored object, for example, the colored region may be formed around the light-reflective region, as described above. In this case, when landing deviation of ink and the like is caused at the time of forming the colored region, for example, the inside light-reflective region may be exposed to the surface.

In view of this point, even in a case of printing a two-dimensional image, if landing deviation is caused, a color of a sheet and the like may emerge on a surface to be printed. However, objects having various shapes are built at the time of building the object, so that influence of landing deviation and the like may be easily caused as compared with the case of printing a two-dimensional image. In a case of building a colored object, a side surface of the object may be colored. The side surface of the object is a surface constituted of end parts of a plurality of layers of ink that are deposited. Thus, an operation of coloring the side surface of the object is largely different from an operation of printing a two-dimensional image. At such an end part, landing deviation may be easily caused as compared with the case of printing a two-dimensional image, for example, due to influence of the shape of the object and air flow in the surroundings at the time of building. Thus, at the time of building the object, influence of landing deviation and the like may be easily caused as compared with the time of printing a two-dimensional image.

On the other hand, the inventors of the present invention have conceived to form a colored region having a certain thickness to prevent the color inside the object from being exposed. With this configuration, for example, even when landing deviation is caused, the light-reflective region can be appropriately prevented from being exposed to the surface.

However, also in this case, the object cannot be colored in a desired color due to influence of the shape thereof, for example, only by simply forming the colored region. More specifically, due to the influence of the shape of the object, a difference in color that is visually recognized from the outside may be increased between regions that should be colored in the same color.

Thus, the inventors of the present invention have conceived to form the colored region corresponding to the shape of the object through further vigorous investigation. More specifically, the inventors have conceived to form the colored region so that the colored region in a normal direction perpendicular to the surface of the object has a constant thickness. Through further vigorous investigation, the inventors have found a characteristic required in this case to make the present invention.

The present invention provides the apparatuses and methods of the independent claims. Therein is provided a building apparatus that builds a three-dimensional object, the building apparatus including: a material ejection unit that ejects a material used for building the object; and a control unit that controls an operation of the material ejection unit, wherein the material ejection unit ejects at least a material for coloring used for coloring the object in a case of building the object that is colored, the material ejection unit forms at least a colored region that is a layer region along a surface shape of the object to be built and is colored with the material for coloring in a case of building the colored object, and the control unit causes the material ejection unit to form the colored region so that the colored region in a normal direction of the object that is a direction perpendicular to the surface of the object has a constant thickness set in advance, wherein the building apparatus is able to build the object colored to include a text or a graphic drawn with material for coloring having a different color from a surrounding color on a surface of the object, and in a case of building an object that is colored to include the text or the graphic, the control unit is configured to cause the material ejection unit to form the colored region so that a width of each part of the text or the graphic in a direction parallel with the surface of the object: (i) is constant at each position in the normal direction in the colored region; or (ii) on the outermost side of the object is larger than the width on the innermost side of the object; or (iii) on the outermost side of the object is smaller than the width on the innermost side of the object.

With this configuration, the colored region of the object can be appropriately formed to have a suitable and sufficient thickness. Accordingly, the color inside the object can be appropriately prevented from being exposed due to landing deviation, for example. By causing the thickness of the colored region in the normal direction to be constant, a desired color can be appropriately represented. Thus, with this configuration, the colored object can be built more appropriately.

In this configuration, the building apparatus builds an object including at least an inside region and a colored region. In this case, a material ejection unit ejects at least a material for forming the inside region and a material for coloring. As the material for forming the inside region, for example, a material of a light-reflective color such as white can be preferably used. As the material for coloring, a material of each process color for performing color representation (for example, full-color representation) can be preferably used. As these materials, a UV curable ink can be preferably used.

As the configuration of the present invention, building methods having corresponding characteristic to apparatuses described above may be used. Also in this case, the same effect as that described above can be obtained.

A building method is a method for building the object, the method including: a step of generating design data of the object including a color region having a constant thickness in the normal direction of the surface from the surface of the object to the inside of the object; and a step of generating the object by depositing a building material based on the design data, wherein the thickness in the normal direction of the color region is at least twice a resolution pitch.

In this way, by causing the thickness of the color region to be constant, quality of the color represented on the principle of subtractive color mixing can be caused to be constant. The thickness in the normal direction is at least twice the resolution pitch, so that two or more types of colors can be overlapped in the normal direction, and various colors can be represented.

In the building method, the thickness in the normal direction of the color region may be equal to or larger than 50 µm and equal to or smaller than 600 µm.

The thickness is preferably equal to or larger than 50 µm to represent various colors by layering a plurality of colors, and the thickness is preferably equal to or smaller than 600 µm to secure visible light transmittance of the color region and to prevent resolution of the color from being lowered.

In the building method according to the present invention, a plurality of types of ink including at least color ink may be ejected from an inkjet head, and the ink may be cured after ejection.

In the building method , the inkjet head may eject a photo-curable ink, and the photo-curable ink may be cured by photoirradiation after ejection. The inkjet head may eject thermoplastic ink at a high temperature and in a low viscosity, and the thermoplastic ink is caused to be at room temperature after ejection to be cured and built.

In the building method , at the step of generating the design data, design data may be generated, the design data including a light-reflective region having a thickness equal to or greater than a certain level that is arranged inside the object and reflects visible light transmitted through the color region.

In this way, the light-reflective region has the thickness equal to or greater than the certain level, so that reflectivity of the light entered from the outside of the object can be enhanced.

In the building method at the step of generating the design data, the design data may be generated, the design data including an isolation region having a constant thickness along the color region between the color region of the object and the light-reflective region.

In this way, the isolation region is included between the color region and the light-reflective region, so that the color region and the light-reflective region can be prevented from being mixed with each other.

In the building method according to the present invention, the building material used at the step of generating the object may be a building material in which an aspect ratio between a dimension in a deposition direction and a dimension in a surface scanning direction of a voxel landing on a surface to be deposited is equal to or larger than 1:2.

In the building method according to the present invention, at the step of generating the design data, the color region may form a halftone of each color by error diffusion, dithering, or FM screening in a surface scanning direction of a deposition surface (slice surface).

In the building method , at the step of generating the design data, an error value of the error diffusion may be diffused or a mask pattern of dithering may be moved or changed between adjacent layers.

In the building, at the step of generating the object, deposition may be performed by ejecting, using an inkjet method, a binding liquid for binding powder onto powder as a building material spread all over a surface to be deposited. In this case, the color of the ink in this system may be caused to be a color of the binding liquid.

In the building method , at the step of generating the design data, in a case in which a shape of the object is defined in an STL file format, the color region may be defined assuming that a direction perpendicular to a surface of a triangular mesh is the normal direction.

The object includes: a color region having a thickness that is at least twice a resolution pitch in the normal direction of the surface from the surface of the object to the inside of the object, and a light-reflective region having a thickness equal to or greater than a certain level in the color region.

The object may include an isolation region having a constant thickness along the color region between the color region and the light-reflective region.

The building apparatus is a building apparatus for building an object, and includes: a design data generation unit that generates design data of the object including a color region having a constant thickness in the normal direction of the surface from the surface of the object to the inside of the object; and a building processing unit that ejects and deposits the building material based on the design data to generate the object, wherein the thickness in the normal direction of the color region is at least twice the resolution pitch.

In the building apparatus , the design data generation unit may generate design data including a light-reflective region having a thickness equal to or greater than a certain level, a light-reflective region being arranged inside the object, reflecting visible light transmitted through the color region.

In the building apparatus , the design data generation unit may generate design data including an isolation region having a constant thickness along the color region between the color region of the object and the light-reflective region.

In the building apparatus, the building processing unit may eject a building material in which an aspect ratio between a dimension in a deposition direction and a dimension in a surface scanning direction of a voxel landing on a surface to be deposited is equal to or larger than 1:2.

### EFFECT OF THE INVENTION

According to the present invention, the colored object can be built more appropriately.

### DESCRIPTION OF THE DRAWINGS

Fig. 1A is a diagram illustrating an example of a configuration of a principal part of a building apparatus 10 according to an embodiment of the present invention.
Fig. 1B is a diagram illustrating an example of a detailed configuration of a head 12 of the building apparatus 10 according to the embodiment of the present invention.
Fig. 2A is a cross-sectional view of an object 50 built by the building apparatus 10, illustrating an example of a configuration with a support layer 52.
Fig. 2B is a cross-sectional view of the object 50 built by the building apparatus 10, illustrating another example of the configuration with the support layer 52.
Fig. 3 is a flowchart illustrating an example of a building operation performed in the present embodiment.
Fig. 4A is a diagram schematically illustrating an example of operations in the flowchart illustrated in Fig. 3.
Fig. 4B is a diagram schematically illustrating an example of the operations in the flowchart illustrated in Fig. 3.
Fig. 4C is a diagram schematically illustrating an example of the operations in the flowchart illustrated in Fig. 3.
Fig. 4D is a diagram schematically illustrating an example of the operations in the flowchart illustrated in Fig. 3.
Fig. 5A is a diagram illustrating an example of a method of expanding a surface color region 200.
Fig. 5B is a diagram illustrating a modification of the method of expanding the surface color region 200.
Fig. 5C is a diagram illustrating a modification of the method of expanding the surface color region 200.
Fig. 6A is a perspective view illustrating external appearance of the object according to the present embodiment.
Fig. 6B is a cross-sectional view of the object.
Fig. 7A is a diagram illustrating a shape of an ink droplet as a building material landed on a surface to be deposited.
Fig. 7B is a diagram illustrating a state of spreading ink droplets all over the surface to be deposited.
Fig. 7C is a diagram schematically illustrating a voxel deposited on the surface to be deposited.
Fig. 8A is a diagram for explaining a normal direction in an object having a doughnut shape.
Fig. 8B is a diagram for explaining a normal direction in a case of an STL file.
Fig. 9 is a cross-sectional view of the object illustrating colors and types of voxels constituting slices.
Fig. 10 is a diagram illustrating a side surface of the object in detail, the object being viewed from a horizontal direction (X-direction).
Fig. 11 is a diagram illustrating an upper surface of the object in detail, the object being viewed from the horizontal direction (X-direction).
Fig. 12 is a diagram illustrating a sloping portion of the surface of the object in detail, the object being viewed from the horizontal direction (X-direction).
Fig. 13A is a diagram illustrating a configuration of the building apparatus according to the present embodiment.
Fig. 13B is a diagram illustrating a configuration of a building processing unit.
Fig. 13C is a diagram illustrating an example of a detailed configuration of a head.
Fig. 14 is a diagram illustrating an operation of building the object performed by the building apparatus according to the present embodiment.
Fig. 15A is a diagram illustrating an example of obtaining a normal vector on a surface of the object having a color texture.
Fig. 15B is a diagram illustrating a state in which a color region, an isolation region, and a light-reflective region are designed.
Fig. 15C is a diagram illustrating slice data of the object in which the color region and the like are defined.
Fig. 15D is a diagram illustrating slice data of the object in which the color region and the like are defined.

### DESCRIPTION OF EMBODIMENT

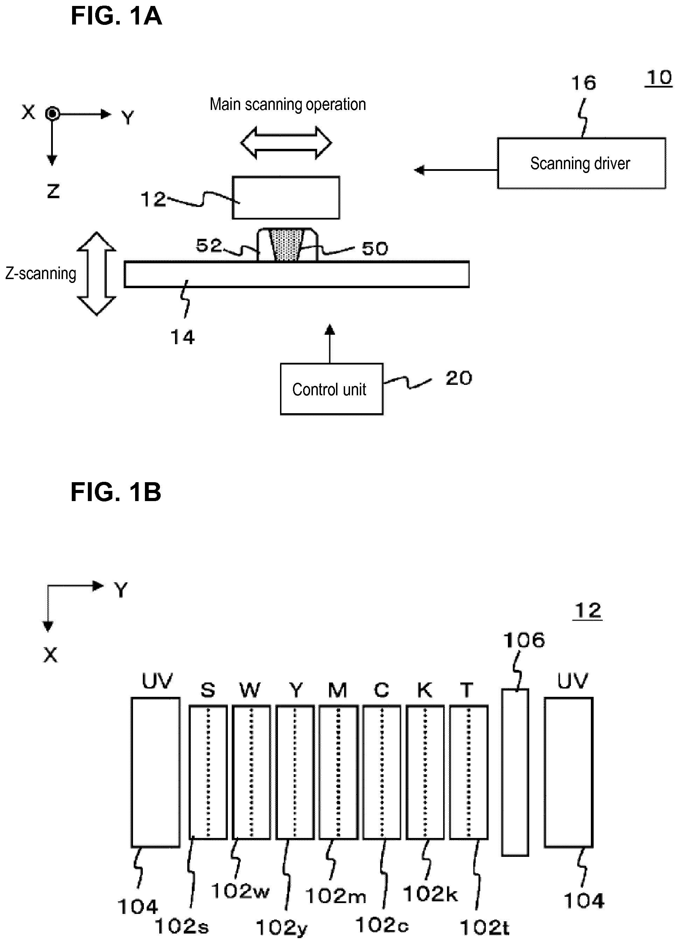

The following describes an embodiment according to the present invention with reference to the drawings. Figs. 1A and 1B illustrate an example of a building apparatus 10 according to the embodiment of the present invention. Fig. 1A illustrates an example of a configuration of a principal part of the building apparatus 10.

Except the points described below, the building apparatus 10 may have a configuration that is the same as or similar to that of a known building apparatus. More specifically, except the points described below, the building apparatus 10 may have a configuration that is the same as or similar to that of a known building apparatus that performs building by ejecting droplets (ink droplets) as a material used for building by using an inkjet head. The building apparatus 10 may further include various configurations required for building or coloring an object 50, for example, in addition to the illustrated configuration.

In this example, the building apparatus 10 is a device that builds the three-dimensional object 50 through additive manufacturing by ejecting ink. In this case, ejecting ink means ejecting droplets of the ink (ink droplets). The additive manufacturing is, for example, a method of building the object 50 by layering a plurality of layers. The object 50 is, for example, a three-dimensional structure. In this example, the building apparatus 10 includes a head 12, a stage 14, a scanning driver 16, and a control unit 20.

The head 12 is a portion that ejects droplets as a material of the object 50, ejects ink to be cured in accordance with a predetermined condition, and causes the ink to be cured to form respective layers constituting the object 50 in an overlapping manner. In this example, the head 12 is an example of a material ejection unit that ejects a material used for building the object 50, and includes a plurality of inkjet heads and a UV light source. As the ink, used is a UV curable ink that is cured by being irradiated with ultraviolet light. In this case, the ink means liquid ejected from the inkjet head. The inkjet head means an ejection head that ejects the liquid (droplet) by an inkjet method. The head 12 further forms a support layer 52 around the object 50. In this case, the support layer 52 is a deposition structure that supports the object 50 by surrounding an outer circumference of the object 50 being built. In this example, the support layer 52 is formed as needed at the time of building the object 50, and removed after the building is completed. A more specific configuration of the head 12 will be described later in detail.

The stage 14 is a table-like member that supports the object 50 being built, arranged at a position opposed to the inkjet head in the head 12, and has an upper surface on which the object 50 being built is placed. In this example, the stage 14 has a configuration in which at least the upper surface thereof can move in a deposition direction. When being driven by the scanning driver 16, the stage 14 causes at least the upper surface thereof to move following the progress of building of the object 50. In this case, the deposition direction is a direction in which the building material is deposited in additive manufacturing. More specifically, in this example, the deposition direction is a direction (Z-direction in the drawing) orthogonal to a main scanning direction (Y-direction in the drawing) and a sub scanning direction (X-direction in the drawing) set in advance for the building apparatus 10.

The scanning driver 16 is a driver that causes the head 12 to perform a scanning operation of moving relative to the object 50. In this case, moving relative to the object 50 means moving relative to the object 50 being built on the stage 14 by moving relative to the stage 14 on which the object 50 is placed. Causing the head 12 to perform a scanning operation means causing the inkjet head in the head 12 to perform the scanning operation.

More specifically, in this example, the scanning driver 16 causes the head 12 to perform, as the scanning operation, a main scanning operation (Y-scanning), a sub scanning operation (X-scanning), and a deposition-direction scanning (Z-scanning). In this case, the main scanning operation is an operation of ejecting the ink while moving in the main scanning direction (Y-direction). The scanning driver 16 causes the head 12 to perform the main scanning operation while fixing the position of the stage 14 in the main scanning direction and moving the head 12. At the time of main scanning operation, the scanning driver 16 further causes the UV light source in the head 12 to be driven. More specifically, the scanning driver 16 turns on the UV light source at the time of main scanning operation to cause the ink landed on the surface to be built of the object 50 to be cured. The surface to be built of the object 50 is a surface on which the next layer of the ink is formed by the head 12.

The sub scanning operation is an operation of moving relative to the stage 14 in the sub scanning direction (X-direction) orthogonal to the main scanning direction. The sub scanning operation may be an operation of moving relative to the stage 14 in the sub scanning direction by a feeding amount set in advance. The scanning driver 16 causes the head 12 to perform the sub scanning operation by causing the stage 14 to move while fixing the position of the head 12 in the sub scanning direction during the main scanning operation.

The deposition-direction scanning is an operation of causing the head 12 to move relative to the stage 14 in the deposition direction (Z-direction). The scanning driver 16 causes the head 12 to perform the deposition-direction scanning by causing at least one of the head 12 and the stage 14 to move in the deposition direction. In this case, causing the head 12 to move in the deposition direction means causing the inkjet head in the head 12 to move in the deposition direction. Causing the stage 14 to move in the deposition direction means causing the position of at least the upper surface of the stage 14 to move. The scanning driver 16 causes the head 12 to perform the deposition-direction scanning to vary a distance between the inkjet head in the head 12 and the stage 14. The distance may be a distance between a nozzle face on which a nozzle is formed in the inkjet head and the upper surface of the stage 14. More specifically, the scanning driver 16 causes the stage 14 to move while fixing the position of the head 12 in the deposition direction. Due to this, the scanning driver 16 adjusts a distance between the surface to be built of the object 50 being built and the head 12.

As described above, movement of the head 12 may be relative to the object 50 in the main scanning operation, the sub scanning operation, and the deposition-direction scanning. Thus, in the main scanning operation, the sub scanning operation, and the deposition-direction scanning, the operation is not limited to the operation described above, and at least one of the head 12 and the stage 14 may be moved. Both of the head 12 and the stage 14 may be moved. The stage 14 may be moved in the main scanning operation. The head 12 may be moved in the sub scanning operation and the deposition-direction scanning.

The control unit 20 is, for example, a CPU of the building apparatus 10, and controls respective units of the building apparatus 10 to control the building operation of the object 50. More specifically, the control unit 20 controls the respective units of the building apparatus 10 based on shape information, color image information, and other pieces of information on the object 50 to be built. In accordance with control by the control unit 20, the building apparatus 10 overlaps materials used for building in the deposition direction to build the object 50 by additive manufacturing.

Subsequently, the following describes a more specific configuration of the head 12. Fig. 1B illustrates an example of a detailed configuration of the head 12. In this example, the head 12 includes a plurality of inkjet heads, a plurality of UV light sources 104, and a flattening roller 106. As illustrated in the drawing, as a plurality of inkjet heads, the head 12 includes an inkjet head 102s, an inkjet head 102w, an inkjet head 102y, an inkjet head 102m, an inkjet head 102c, an inkjet head 102k, and an inkjet head 102t (hereinafter, referred to as inkjet heads 102s to 102t).

The inkjet heads 102s to 102t are an example of the ejection head, and eject ink by the inkjet method. More specifically, in this example, the respective inkjet heads 102s to 102t are inkjet heads that eject the UV curable ink, and are arranged side by side in the main scanning direction while the positions thereof are aligned in the sub scanning direction. As each of the inkjet heads 102s to 102t, a known inkjet head can be preferably used. Each of the inkjet heads 102s to 102t includes, on a surface opposed to the stage 14, a nozzle array in which a plurality of nozzles are arranged side by side in the sub scanning direction. Due to this, each of the inkjet heads 102s to 102t ejects the ink in a direction toward the stage 14. In this example, the respective inkjet heads 102s to 102t eject the ink of different colors.

The inkjet head 102s is an inkjet head that ejects ink as a material of the support layer 52. As the material of the support layer 52, a water-soluble material that can be dissolved in water after the object 50 is built can be preferably used. In this case, it is preferable to use a material that is easily decomposable and has a cure degree with respect to ultraviolet light is lower than that of the material constituting the object 50. As the material of the support layer 52, a known material for a support layer can be preferably used.

The inkjet head 102w is an inkjet head that ejects ink of white (W). In this example, white ink is used in a case of forming a light-reflective region in the object 50. In a case of building the object 50 the surface of which is colored, the light-reflective region is formed inside the colored region of the object 50. In this case, building the object 50 the surface of which is colored may mean building the object 50 at least the surface of which is colored. The surface of the object 50 is a region in which the color can be visually recognized from the outside of the object 50. In this example, the white ink is also used as ink for building that is used for forming at least the inside of the object 50. In this case, the inkjet head 102w functions as an example of a head for inside building, and ejects a material for forming an inside region of the object 50. The inside region of the object 50 means a region constituting the inside of the object 50.

Each of the inkjet heads 102y, 102m, 102c, and 102k (hereinafter, referred to as the inkjet heads 102y to 102k) is an example of a head for coloring that ejects a material for coloring the object 50, and ejects ink for coloring of different colors. In this case, the ink for coloring is an example of the material for coloring used for coloring the object 50 in a case of building the colored object 50. More specifically, the ink for coloring is ink of each process color used for color representation (for example, full-color representation). In this example, the respective inkjet heads 102y to 102k eject the UV curable ink of respective colors, that is, Y (yellow), M (magenta), C (cyan), and K (black). In this example, the ink for coloring is used together with clear ink at the time of forming the colored region in the object 50.

The inkjet head 102t is an inkjet head that ejects clear ink. In this case, the clear ink means ink of clear color, that is, a colorless transparent color (T).

Arrangement of the inkjet heads 102s to 102t, the types of the inkjet heads included in the head 12, and the like are not limited to the configuration illustrated in the drawing, and may be variously modified. Some inkjet heads may be arranged while shifting the positions thereof from the other inkjet heads in the sub scanning direction. The head 12 may further include inkjet heads and the like for a pale shade of each color, R (red), G (green), B (blue), orange, and the like.

The UV light sources 104 are configurations for curing the ink, and generate ultraviolet light that cures the UV curable ink. As the UV light source 104, an ultraviolet LED (UVLED) and the like can be preferably used. As the UV light source 104, a metal halide lamp, a mercury lamp, and the like may be used. In this example, the respective UV light sources 104 are arranged at one end side and the other end side of the main scanning direction of the head 12 to hold the inkjet heads 102s to 102t therebetween.

The flattening roller 106 has a configuration of flattening the layer of the ink formed when the object 50 is being built. In this example, the flattening roller 106 is arranged between the inkjet heads 102s to 102t and the UV light source 104. Accordingly, the flattening roller 106 is arranged side by side in the main scanning direction with the inkjet heads 102s to 102t while being aligned therewith in the sub scanning direction. Due to this, the flattening roller 106 removes part of the ink before curing by being in contact with the surface of the layer of the ink at the time of main scanning operation, for example, to flatten the layer of the ink.

More specifically, in this example, the head 12 includes only one flattening roller 106. In this case, the flattening roller 106 is arranged between the UV light source 104 on one end side of the head 12 and the inkjet heads 102s to 102t. In this case, the scanning driver 16 causes the head 12 to perform at least the main scanning operation in a direction (one direction) in which the flattening roller 106 is at the rear side of the inkjet heads 102s to 102t. The flattening roller 106 flattens the layer of the ink during the main scanning operation in this direction. The scanning driver 16 may cause the head 12 to perform the main scanning operation in both directions. In this case, the flattening roller 106 flattens the layer of the ink only when the main scanning operation in one direction is being performed. By using the head 12 having the configuration as described above, according to this example, the object 50 can be appropriately built by using an inkjet building method.

In a modification of the configuration of the building apparatus 10, building may be performed by using a method other than the inkjet building method, for example. Also in this case, by using any method of forming the colored region on the surface of the object 50, the same effect as this example described above and below can be obtained. More specifically, in a case of performing building by using a method other than the inkjet building method, the shape of the object 50 may be formed with a material such as gypsum, and the surface thereof may be colored with a coloring agent and the like. In a case of forming the shape of the object 50 by layering a large number of sheet members (for example, paper sheets) having a shape corresponding to a cross-sectional shape of each part of the object 50, for example, a member having a colored outer edge part may be used as each of the sheet members.

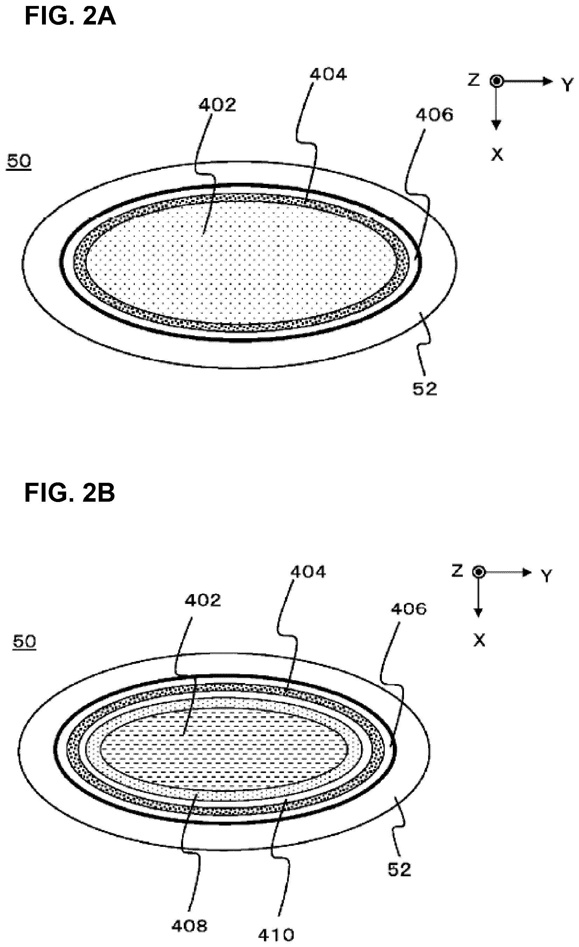

Subsequently, the following describes an example of the configuration of the object 50 built by the building apparatus 10. Figs. 2A and 2B are drawings illustrating examples of the configuration of the object 50 built by the building apparatus 10, and illustrates an example of a cross section of the object 50 in a case of building the object 50 having an elliptical shape (ellipsoidal shape). As illustrated in the drawing, the illustrated cross section is an X-Y cross section perpendicular to the Z-direction. In this case, a Z-X cross section and a Z-Y cross section of the object 50 that are respectively perpendicular to the Y-direction and the Z-direction have the same configuration as described above.

As described above, in this example, the head 12 (refer to Fig. 1A) in the building apparatus 10 (refer to Fig. 1A) includes the inkjet heads 102y to 102k (refer to Fig. 1B) that eject ink for coloring. By using the inkjet heads 102y to 102k, the building apparatus 10 builds the object 50 the surface of which is colored.

In this example, the building apparatus 10 builds the object 50 the surface of which is colored at least at the time of operation in any building mode set in advance. More specifically, the building apparatus 10 builds the object 50 the surface of which is colored in a case of performing building in a surface decoration mode as a predetermined building mode. The building apparatus 10 may be able to further perform building in another building mode. The building apparatus 10 may build the object 50 that is not colored and the like in another building mode.

Fig. 2A is a cross-sectional view of an object 50 built by the building apparatus 10, illustrating an example of a configuration with a support layer 52, and illustrates an example of the configuration of the building apparatus 10 that is built at the time of building in the surface decoration mode. In this example, in a case of performing building in the surface decoration mode, the building apparatus 10 builds the object 50 including an inside region 402, a colored region 404, and a protective region 406. The support layer 52 is formed around the object 50 as needed.

The inside region 402 is a region inside the object 50 constituting the shape of the object 50. In this example, the head 12 forms the inside region 402 using white ink. Due to this, the inside region 402 is caused to also function as a light-reflective region. In this case, the light-reflective region means a light-reflective region that reflects light entered from the surface side of the object 50 via the protective region 406 and the colored region 404. By forming such a light-reflective region inside the colored region 404, coloring can be appropriately performed by subtractive color mixing.

The colored region 404 is a region that is colored with ink for coloring. As illustrated in the drawing, in this example, the colored region 404 is a layer region along the surface shape of the object 50. The head 12 forms the colored region 404 around the inside region 402 by using the ink for coloring of various colors and clear ink. In this case, various colors are represented by adjusting an ejection amount of the ink for coloring of various colors to respective positions. The clear ink is used for compensating variation in amount of the ink for coloring (ejection amount per unit volume) caused due to a difference in color. With this configuration, each position of the colored region 404 can be appropriately colored in a desired color. Due to this, the colored region 404 colored with the ink for coloring can be appropriately formed. A method of forming the colored region 404 will be described later in more detail.

The protective region 406 is a transparent region for protecting an outer face of the object 50. In this example, the head 12 forms the protective region 406 around the colored region 404 using the clear ink. By forming each region as described above, the object 50 the surface of which is colored can be appropriately formed.

In a modification of the configuration of the object 50, a specific configuration of the object 50 may be caused to be different from that described above. Fig. 2B is a cross-sectional view of the object 50 built by the building apparatus 10, illustrating another example of the configuration with the support layer 52, and illustrates another example of the configuration of the building apparatus 10 built at the time of building in the surface decoration mode. In this case, the head 12 forms a light-reflective region 408 between the inside region 402 and the colored region 404 in distinction from the inside region 402. An isolation region 410 is further formed between the light-reflective region 408 and the colored region 404.

With this configuration, the inside region 402 may be formed with ink other than the white ink. The inside region 402 may be formed using optional ink other than the material of the support layer 52. In a modification of the configuration of the building apparatus 10, the object 50 may be built by further using ink for building (for example, ink dedicated for building) other than the white ink, and the inside region 402 may be formed with the ink for building.

In this case, the light-reflective region 408 is formed with light-reflective ink such as white ink. With this configuration, the light entered from the surface side of the object 50 via the colored region 404 and the like can be appropriately reflected. Due to this, coloring can be appropriately performed by subtractive color mixing.

In this case, the light-reflective region 408 is preferably formed to have a thickness of about 100 µm or more in a direction perpendicular to the surface of the object 50 (normal direction). With this configuration, coloring can be more appropriately performed by subtractive color mixing.

The isolation region 410 is a transparent region formed with clear ink. By forming the isolation region 410, the ink can be appropriately prevented from being mixed between the light-reflective region 408 and the colored region 404. With this configuration, the object 50 the surface of which is colored can be appropriately formed.

Subsequently, the following describes a method of forming the colored region 404 according to this example in more detail. The method of forming the colored region 404 described below is an example of a method of forming the colored region 404 at the time of building in the surface decoration mode described above with reference to Figs. 2A and 2B.

In this example, the building apparatus 10 causes each inkjet head in the head 12 to eject the ink in accordance with control by the control unit 20 (refer to Fig. 1A). In this case, the building apparatus 10 causes the head 12 to form the colored region 404 by causing the inkjet heads 102y to 102k (refer to Fig. 1B) to eject the ink for coloring, and causing the inkjet head 102t (refer to Fig. 1B) to eject the clear ink. In this case, the building apparatus 10 causes the head 12 to form the colored region 404 so that the thickness of the colored region 404 in the normal direction at each position becomes a constant thickness set in advance.

In this case, the thickness of the colored region 404 in the normal direction means the thickness of the colored region 404 in a direction perpendicular to the surface of the object 50. Causing the thickness of the colored region 404 to be a constant means causing a thickness in design to be constant. Causing the thickness to be constant means causing the thickness to be constant in an error range corresponding to accuracy in building, and a range in which variation in thickness caused by a specification or limitation of the building operation is allowed.

The control unit 20 causes the head 12 to form the colored region 404 so that the thickness in the normal direction at each position of the colored region 404 becomes a reference thickness set in advance. The reference thickness is any thickness selected in a range from 50 to 500 µm. The reference thickness is preferably any thickness selected in a range from 100 to 400 µm. More specifically, in this example, the reference thickness is about 300 µm, for example.

In view of preventing an internal color of the object 50 from being exposed even when landing deviation in a certain degree is caused at the time of building, a preferable reference thickness of the colored region 404 is equal to or larger than 60 µm, and more preferably equal to or larger than 80 µm. In a case of performing coloring with higher accuracy, the reference thickness of the colored region 404 is preferably equal to or smaller than 150 µm.

In comparison with the thickness of the layer of the ink deposited by additive manufacturing, the reference thickness of the colored region 404 is preferably at least twice the thickness of one layer of the ink (two layers or more). More preferably, the reference thickness of the colored region 404 is three times or more the thickness of one layer of the ink (three layers or more). In this case, the thickness of one layer of the ink means a thickness of a layer of the ink corresponding to one piece of slice data indicating one cross section of the object 50 to be built. The building operation performed by using the slice data is described below in more detail.

More specifically, the thickness of one layer of the ink may be about 30 µm. In this case, when the reference thickness of the colored region 404 is about 300 µm, the reference thickness corresponds to the thickness of about ten layers of the ink. Focusing on an in-plane direction of the layer of the ink orthogonal to the direction in which the layer of the ink is deposited (deposition direction), the thickness of about 300 µm may correspond to a range in which about 5 to 6 dots of the ink are arranged in the in-plane direction.

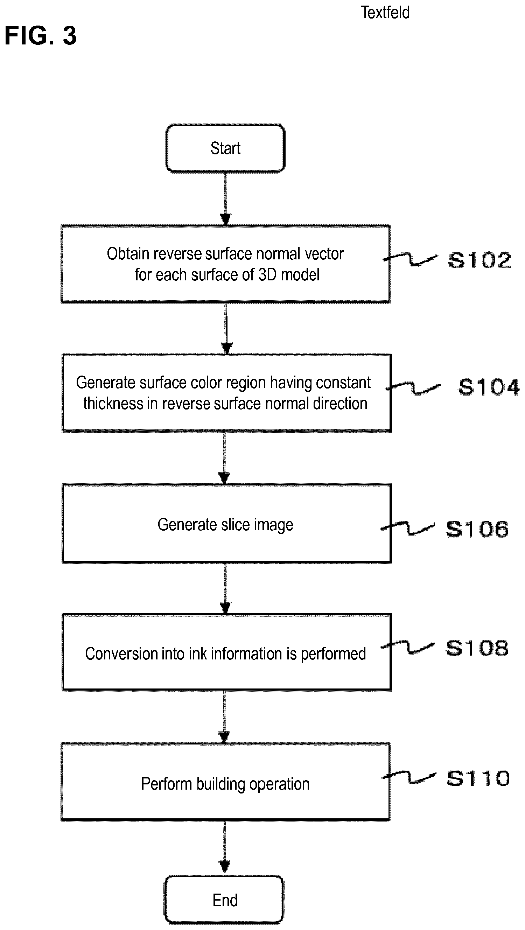

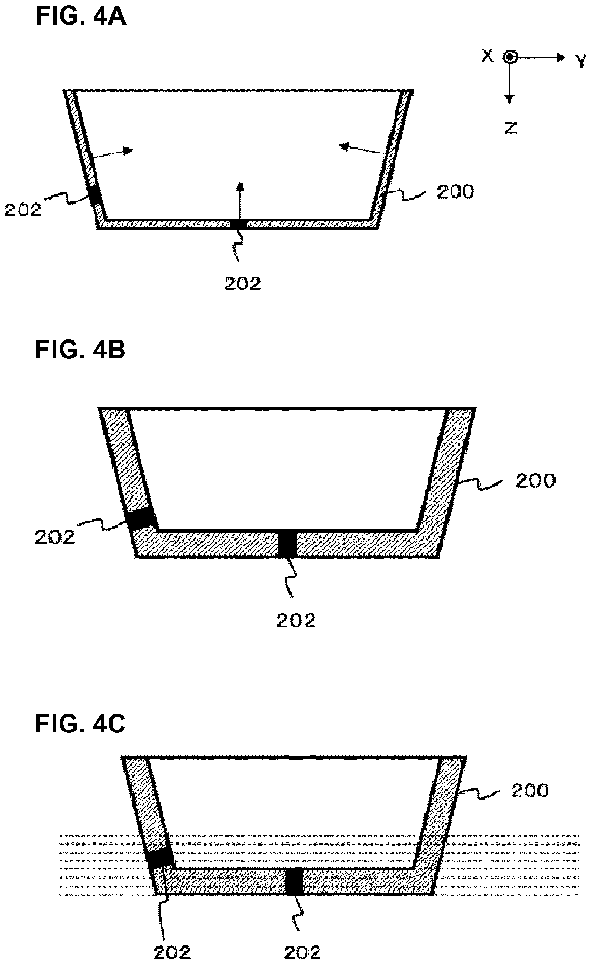

The colored region 404 is formed in the building operation described below. Fig. 3 and Figs. 4A to 4D illustrate an example of the building operation performed in this example. Fig. 3 is a flowchart illustrating an example of the building operation performed in this example. Figs. 4A to 4D are diagrams schematically illustrating an example of each operation in the flowchart.

The flowchart in Fig. 3 illustrates an operation of a control device (for example, a host PC) that controls the operation of the building apparatus 10 from the outside in addition to an actual building operation (depositing operation) performed by the building apparatus 10 (refer to Fig. 1A). More specifically, among the operations illustrated in Fig. 3, the operations at Steps S102 to S108 may be performed by the control device such as a host PC. In this case, the building operation at Step S110 may be performed by the building apparatus 10.

The building operation is an example of an operation of building the object based on data of a 3D model prepared by a user. In this case, the data of the 3D model means three-dimensional data representing the object to be built. As the data of the 3D model, general-purpose 3D data independent of a device type of the building apparatus 10 can be preferably used.

Figs. 4A to 4D schematically illustrate a cross-sectional shape of the 3D model at the timing of each operation in the flowchart. In the drawing, a surface color region 200 is a portion corresponding to the colored region of the object to be built. In the 3D model, information of a color that should be applied to the object is set to the surface color region 200. A design part 202 illustrated in the surface color region 200 indicates a portion in which a design such as a text or a graphic is drawn in the surface color region 200.

For convenience of illustration, Figs. 4A to 4D illustrate the 3D model in a case in which a lower surface (bottom face) and a side surface of the object are colored and an upper surface thereof is not colored, in a case of building the object having a different shape from that illustrated in Fig. 2A. In this case, the lower surface means a surface on a lower side in the deposition direction. The side surface means a surface intersecting with the lower surface in a steeply rising state. In another example of the building operation, the entire surface of the object including the upper surface thereof may be colored.

The following describes each operation in the flowchart. In the building operation, first, a normal vector for the surface of the object to be built is calculated. More specifically, in this operation, as illustrated in Fig. 4A, a reverse normal vector is obtained for each surface of the 3D model represented by the data of the 3D model (S102).

In this case, each surface of the 3D model means an outer peripheral surface of the 3D model. Obtaining a reverse normal vector for each surface means, for each position constituting the outer peripheral surface of the 3D model, obtaining a reverse normal vector orthogonal to the outer peripheral surface at each position. As illustrated in Fig. 4A as an arrow, the reverse normal vector means a vector that is orthogonal to the outer peripheral surface of the 3D model and heads toward the inside of the 3D model (a normal vector of a reversed surface).

Subsequently, the thickness (width) of the surface color region 200 is adjusted by utilizing the obtained reverse normal vector. More specifically, in this operation, as illustrated in Fig. 4B, the thickness of the surface color region 200 is adjusted so that the thickness in a reverse surface normal direction is constant, the reverse surface normal direction being a direction of the reverse normal vector at each position of the surface color region 200. Due to this, the surface color region 200 having a constant thickness in the reverse surface normal direction is generated (S102).

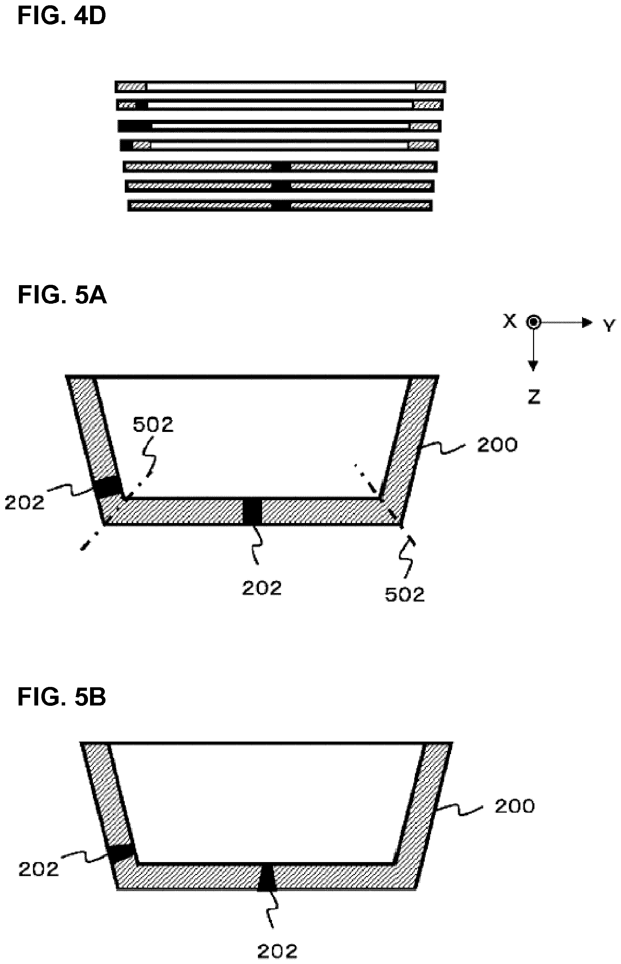

After the surface color region 200 having the constant thickness is generated, a slice image is generated using the 3D model (S106). In this case, generating the slice image means generating the slice data as data obtained by cutting the data of the 3D model into round slices at regular intervals. The slice image means an image represented by the layer of the ink generated corresponding to the slice data. More specifically, in this operation, as illustrated in Fig. 4C, the slice data (slice image) as illustrated in Fig. 4D is generated by slicing the 3D model at intervals of the thickness of the layer of the ink (deposition size of the ink) formed by the building apparatus 10.

In the slice data illustrated in Fig. 4D, a portion corresponding to the surface color region 200 before slicing is a portion to be the colored region 404 (refer to Fig. 2A) to which a color of the surface (surface color) is applied in the object. A portion corresponding to the inside of the surface color region 200 is a portion to be the inside region 402 (refer to Fig. 2A) that functions as a light-reflective region and the like in the object 50.

Conversion into ink information is performed based on generated pieces of slice data (S108). In this case, conversion into ink information means to designate the ink to be used at the time of building by the building apparatus 10 for each pixel of the slice data. Each pixel of the slice data means each pixel of the slice image corresponding to the slice data. More specifically, in this operation, by appropriately using error diffusion, systematic dithering, and the like, color information set to the surface color region 200 of the 3D model is converted into the ink information used by the building apparatus 10.

In this example, the operations up to Step S106, in which the slice data is generated, may be performed by using the data of the 3D model independent of the device type and the like of the building apparatus 10. In the operations at Step S108 and the following steps, in which conversion into the ink information is performed, it is preferable to use the building data in a format that matches with the device type and the like of the building apparatus 10 performing a depositing operation.

Thereafter, by using the slice data converted into the ink information, the building operation (depositing operation) is performed by the building apparatus 10. Due to this, the object including the colored region 404 having a constant thickness in the normal direction is built.

With this configuration, as the building data for controlling building performed by the building apparatus 10, data in which the surface color region 200 is expanded by an amount corresponding to the constant thickness inside the 3D model can be appropriately generated. By causing the building apparatus 10 to perform building by using such building data, the object 50 including the colored region 404 having an appropriate and sufficient thickness can be built. Due to this, the internal color (for example, light-reflective white) of the object can be appropriately prevented from being exposed due to landing deviation and the like, and color representation of the surface of the object can be more appropriately performed. In a case in which the surface of the object is shaved or the surface is polished, for example, the internal color can be more appropriately prevented from being exposed. Thus, with this configuration, the colored object can be more appropriately built.

In this case, in generating data for designating a method of coloring the surface of the object (surface coloring data) at the time of building a three-dimensional object, as described above with reference to Fig. 3 and Figs. 4A to 4D, for example, the slice data in which the thickness of the colored region 404 is constant in a state after building (building result) can be more appropriately generated by generating the slice data after expanding the surface color region 200 in the normal direction perpendicular to the surface of the 3D model. Accordingly, the colored region 404 in the object can be more appropriately formed.

According to this example, by forming the colored region 404 having a sufficient thickness, various color representation can be more appropriately performed for the surface color of the object, not limited to a single color. More specifically, even in a case of using the 3D model in which gradation or texture is applied, favorable color representation can be appropriately performed in the object. Furthermore, by causing the thickness of the colored region 404, a desired color can be more appropriately represented.

In a case of building the object by additive manufacturing, in a conventional method, a thickness of a portion corresponding to the surface color region 200 in the slice image is typically adjusted so that the thickness of the layer of the ink in the deposition direction (Z-direction) and the width in the in-plane direction orthogonal to the deposition direction (width in the XY-plane) are matched with a certain thickness or a certain width. On the other hand, in this example, the thickness of the colored region 404 in the normal direction is caused to be constant corresponding to the shape of the object instead of the thickness or the width described above. Thus, it can be considered that the various effects as described above are obtained by a characteristic of this example that is different from a configuration in the related art.

Subsequently, the following describes the method of expanding the surface color region 200 in more detail. In this case, expanding the surface color region 200 means the operation performed at Step S104 in the flowchart illustrated in Fig. 3.

Figs. 5A to 5C illustrate an example of the method of expanding the surface color region 200. Fig. 5A is a diagram illustrating an example of the method of expanding the surface color region 200, and illustrates an example of a case of expanding the surface color region 200 similarly to the case described above with reference to Fig. 3 and Figs. 4A to 4D. As described above, in this example, the thickness of the surface color region 200 in the 3D model is adjusted so that the thickness of the colored region 404 (refer to Fig. 2A) in the normal direction is constant.

In this case, the thickness of the colored region 404 is not necessarily caused to be strictly constant, and a permissible range in a certain degree may be set in accordance with required accuracy and the like in building to cause a difference from the reference thickness set in advance falls within the permissible range set in advance. In this case, the surface color region 200 may be expanded so that the thickness of the colored region 404 falls within the permissible range.

Causing the thickness of the colored region 404 to be constant may mean causing the thickness of the colored region 404 to be constant except some exceptional positions. In this case, depending on the shape of the object 50 to be built, part of the colored region 404 may have a thickness out of the permissible range. In a case of building the object 50 having a shape in which the lower surface intersects with the side surface, the thickness of the colored region 404 in the normal direction may be permitted to be deviated from the constant thickness in the vicinity of a region in which the lower surface intersects with the side surface.

More specifically, in a case of building the object 50 having the shape as described above, the corresponding surface color region 200 includes a portion corresponding to the lower surface and a portion corresponding to the side surface as illustrated in Fig. 5A. In this case, as is clear from the drawing, it may be difficult to clearly define the thickness of the surface color region 200 in the vicinity of a boundary between both portions indicated by a dot-and-dash line 502 in the drawing. As a result, the thickness of the surface color region 200 may be hardly set to be constant.

Thus, in such a case, the surface color region 200 may be expanded so that the surface color region 200 becomes continuous at the boundary, giving higher priority to continuity of the surface color region 200 than the thickness of the surface color region 200. With this configuration, the surface color region 200 can be more appropriately expanded. In this case, at the time of building by the building apparatus 10, the control unit 20 (refer to Fig. 1A) causes the head 12 (refer to Figs. 1A and 1B) to form the colored region 404 so that the colored region 404 along the lower surface is continuous to the colored region 404 along the side surface. With this configuration, objects having various shapes can be more appropriately built.

In a case of building the object while causing the color of the lower surface to be different from the color of the side surface, the lower surface and the side surface may be colored while separating the colors at the line indicated by the dot-and-dash line 502 as a boundary. With this configuration, objects colored in various colors can be appropriately built.

Such processing for the vicinity of the boundary of the surfaces may be similarly performed for the vicinity of a boundary at which a plurality of other surfaces intersect with one another, not limited to the boundary between the lower surface and the side surface. In a case of building the object 50 the upper surface of which is also colored, the upper surface being a surface on an upper side in the deposition direction, the processing may be similarly performed for the vicinity of a region in which the upper surface intersects with the side surface. That is, in a case of building the object 50 having a shape in which the upper surface intersects with the side surface, the thickness of the colored region 404 in the normal direction may be permitted to be deviated from the constant thickness in the vicinity of the region in which the upper surface intersects with the side surface. Also in this case, the surface color region 200 may be expanded so that the surface color region 200 becomes continuous at the boundary portion.

Subsequently, the following describes various examples of a method of handling the design part 202 at the time of expanding the surface color region 200. At the time of building the object, the building apparatus 10 draws a design such as a text and a graphic using ink for coloring of a color different from a surrounding color corresponding to the design part 202 in the surface color region 200. In this case, the surrounding color means a surrounding color on the surface of the object. In this example, the text, the graphic, and the like are formed to have the same thickness as that of the entire colored region 404. Thus, at the time of expanding the surface color region 200, the design part 202 including the text, the graphic, or the like is expanded to have the same thickness as that of the surface color region 200.

In this case, as illustrated in Figs. 4 and 5A, the design part 202 may be expanded in the normal direction while keeping the constant width of the design part 202 in a direction orthogonal to the normal direction. With this configuration, at each position in the normal direction in the colored region 404, the width of each part of a text, a graphic, and the like in the direction orthogonal to the normal direction becomes constant. With this configuration, a text, a graphic, and the like having a thickness projecting toward the inside of the object can be appropriately formed. Accordingly, the colored object including a text, a graphic, and the like can be appropriately built.

The width of each part of the text, the graphic, or the like means the width of each element constituting the text, the graphic, or the like. Hereinafter, for convenience of explanation, the width of each part of the text, the graphic, or the like is simply referred to as the width of the text, the graphic, or the like.

In a modification of the configuration of the building apparatus 10, the width of the text, the graphic, or the like may be varied corresponding to the position in the normal direction. In this case, to obtain a specific visual effect, the width of the text, the graphic, or the like may be varied. Alternatively, correction may be performed considering appearance of the text, the graphic, or the like. The width of the text, the graphic, or the like is preferably adjusted at the time of expanding the surface color region 200, for example, before the slice data is generated.

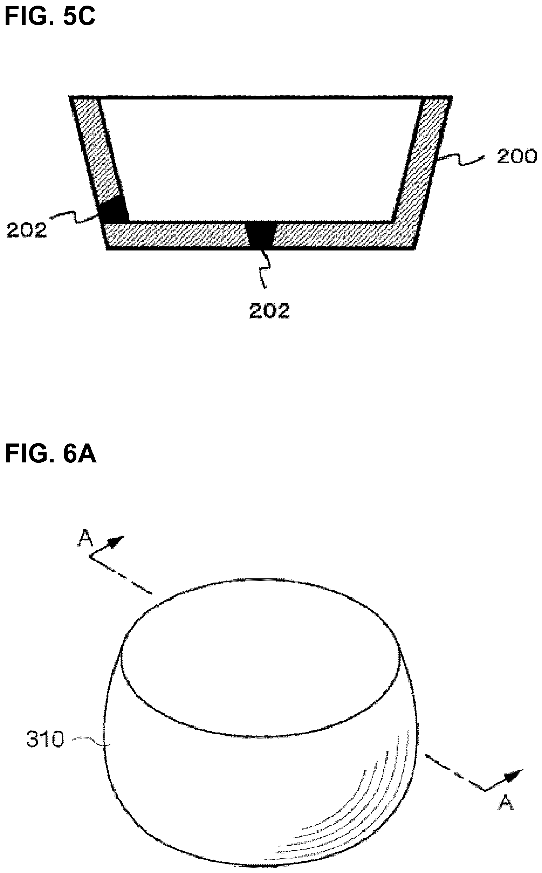

Figs. 5B and 5C are diagrams illustrating a modification of the method of expanding the surface color region 200. Fig. 5B illustrates an example of a case in which the width of the text, the graphic, or the like is gradually reduced toward the inside of the object. In this case, at the time of expanding the surface color region 200, the width of the design part 202 is gradually reduced from the surface side toward the inside as illustrated in the drawing. With this configuration, in the object built by the building apparatus 10, the width of the text, the graphic, or the like in a direction parallel with the surface on the outermost side of the object is larger than that on the inside. Also in this case, the colored object including the text, the graphic, or the like can be appropriately built.

In this case, the text, the graphic, or the like can be drawn in a state in which an end part (edge) of the text, the graphic, or the like is emphasized. Thus, with this configuration, obtained is a visual effect different from that in a case in which the width of the text, the graphic, or the like is constant.

The width of the text, the graphic, or the like may be varied differently from the above case. Fig. 5C illustrates an example of a case in which the width of the text, the graphic, or the like is gradually increased toward the inside of the object. In this case, at the time of expanding the surface color region 200, the width of the design part 202 is gradually increased from the surface side toward the inside as illustrated in the drawing. With this configuration, in the object built by the building apparatus 10, the width of the text, the graphic, or the like in a direction parallel with the surface is smaller on the outermost side of the object than that on the inside. Also in this case, the colored object including the text, the graphic, or the like can be appropriately built.

In this case, the text, the graphic, or the like can be drawn such that it gives an impression of spreading out. Thus, with this configuration, obtained is a visual effect different from that in a case in which the width of the text, the graphic, or the like is constant.

Next, the following describes the building apparatus, the building method, and the object according to another embodiment of the present invention. The following describes a building method of ejecting a UV curable ink (hereinafter, referred to as "UV ink") from the inkjet head, and irradiating the ejected UV ink with ultraviolet light to be cured. However, the present invention can be applied to not only this system but also a system of forming the object using a deposition system. For example, the present invention can be applied to a system of spreading powder as a material of the object, and ejecting a binding liquid using an inkjet method to form a layer. In this case, a color of the ink in the present system may be assumed to be a color of the binding liquid.

### Configuration of object

Fig. 6A is a perspective view illustrating an external appearance of an object 310 according to the present embodiment. The object 310 according to the present embodiment has a substantially cylindrical shape in which a side surface is curved and swells. The surface of the object 310 has a color. The shape of the object and the shape of the object manufactured by using a manufacturing method according to the present invention are not limited to the shape illustrated in Fig. 6A, and can be a hexahedron, a sphere, a hollow structure, a ring structure, a horseshoe shape, and the like.

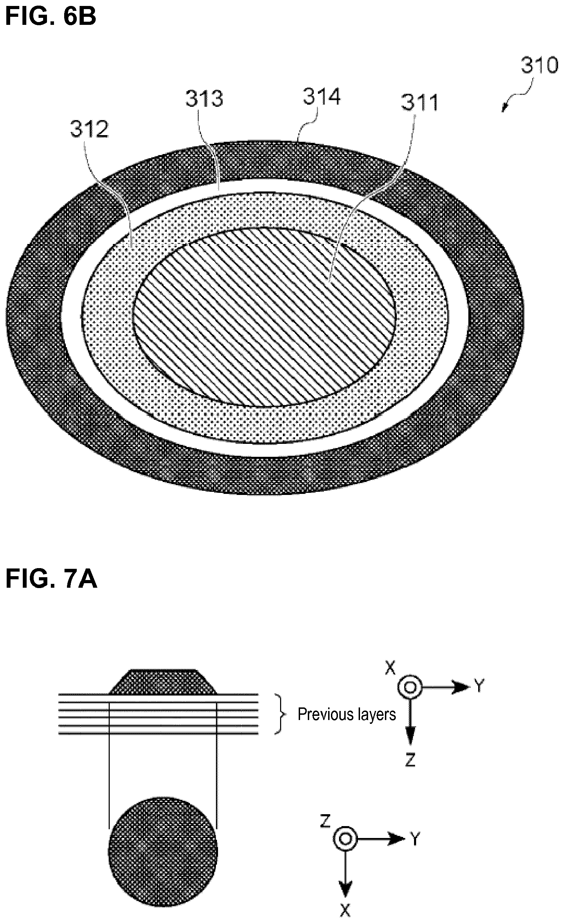

Fig. 6B is an A-A cross-sectional view of the object 310 illustrated in Fig. 6A. The object 310 includes a building region 311, a light-reflective region 312, an isolation region 313, and a color region 314 in this order from the inside. In the example illustrated in Fig. 6B, the color region 314 is arranged on the outermost surface. Alternatively, a transparent protective layer may be arranged on an upper surface of the color region 314.

In the object 310 according to the present embodiment, the color region 314 has a constant thickness. The thickness of the color region 314 in the normal direction of the surface of the color region 314 is at least twice a resolution pitch. The following describes a configuration of the color region 314 in detail. Prior to the description, some terms used in the present embodiment will be explained. The following description about the terms is used for understanding the object according to the present embodiment, not limiting the present invention.

Fig. 7A is a diagram illustrating a shape of one ink droplet of the building material landed on a surface to be deposited. The ink droplet has a substantially round shape when viewed from the upper surface (Z-direction), and has a substantially rectangular shape when viewed from a side (X-direction or Y-direction). The shape viewed from the side is different depending on an amount of the ink droplet and surface tension. For example, in a case in which the material has large surface tension and the amount of the ink droplet is small, the ink droplet has a shape close to a hemisphere. The amount of the ink droplet is such that a dimension in a height direction is larger than a thickness Vz of the layer to be formed by 10 to 20%, and the height of the layer is adjusted by scraping off a portion higher than the thickness Vz with the flattening roller.

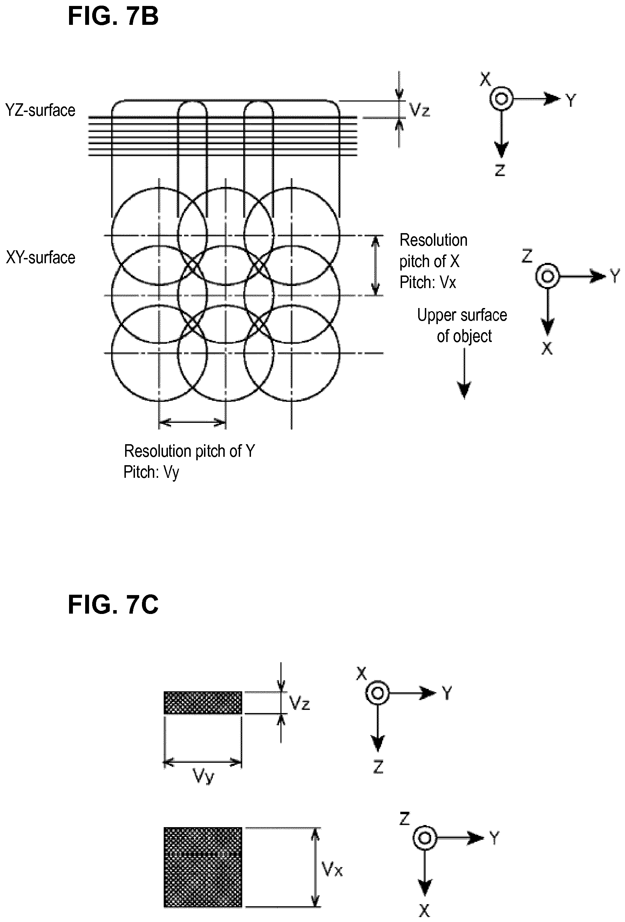

Fig. 7B is a diagram illustrating a state of spreading a plurality of ink droplets all over the surface to be deposited. Each ink droplet is ejected to a target point designed in advance. In Fig. 7B, the target point is represented by an intersection point of a grid that is virtually illustrated. An interval between target points is the resolution pitch, and in Fig. 7B, an interval between intersection points of the grid is the resolution pitch. A specific example of the resolution pitch is 42 µm at 600 dpi, for example. A diameter of the ink droplet is larger than the resolution pitch, so that the ink droplets are spread all over the surface to be deposited without a gap, and a new layer is formed on the surface to be deposited.

Fig. 7C is a diagram schematically illustrating a voxel deposited on the surface to be deposited. One voxel has widths Vx and Vy defined based on the resolution, and has a height Vz equal to the thickness of one layer. In the present embodiment, width Vx = width Vy. Regarding the UV ink used in the present embodiment, an aspect ratio between the height Vz and the widths Vx and Vy is 1:2 to 1:6. The voxel and the resolution have been described above.

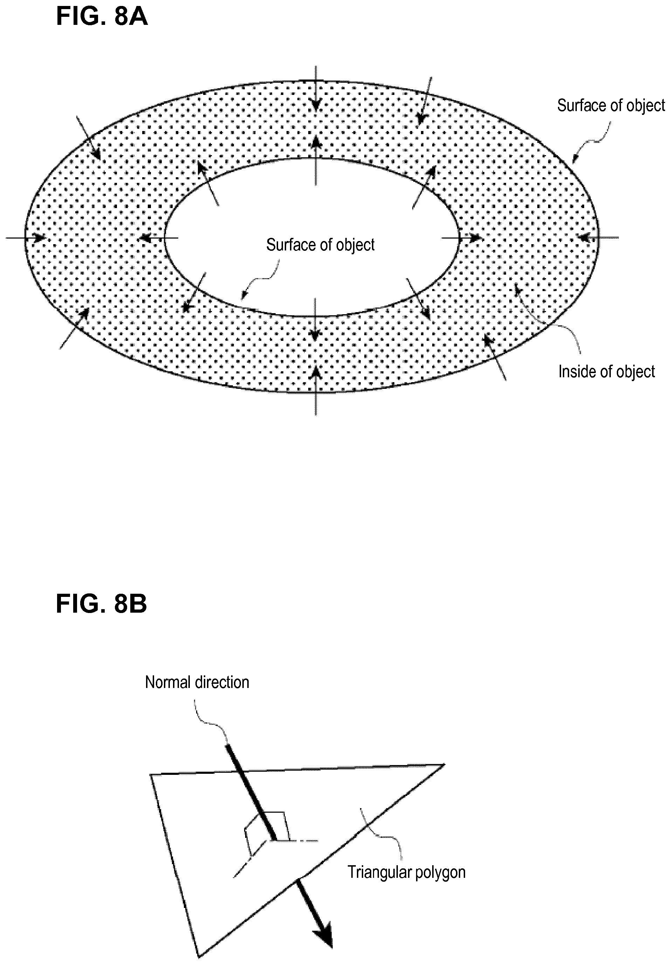

Figs. 8A and 8B are diagrams for explaining the normal direction. Fig. 8A is a diagram illustrating a cross section of the object having a doughnut shape. The normal direction is a direction perpendicular to each portion of the surface of the object. Fig. 8A is two-dimensionally represented for convenience, but an actual normal vector is three-dimensional, so that the vector inclines toward a depth direction of the drawing depending on a position on the surface. In a case in which an external shape of the object is defined in STL data, as illustrated in Fig. 8B, the normal direction is defined with respect to a triangular surface as a component.

Next, the following describes the layer and the slice data. As illustrated in Fig. 7B, the layer has a planar shape having a constant thickness formed by ejecting the ink droplets in a surface direction without a gap. The slice data is data having a two-dimensional planar shape constituting the shape of the object and a color image of the surface. A plurality of layers may be formed with one slice data, and one layer may be formed with a plurality of pieces of slice data (in a case of reducing original data).

To represent various colors on the surface of the object, two or more types of ink are preferably overlapped with each other. In the present embodiment, one slice data is constituted of at least two layers. In a case in which identical scanning is performed with heads of a plurality of colors, two layers are formed through one scanning process. One layer may be formed through one scanning process, and one piece of slice data (including two layers) may be constituted through two scanning processes.

In a case of performing scanning with a head including an inkjet head for a plurality of building materials or an inkjet head for a support material, a plurality of layers may be formed through one scanning process based on one piece of slice data. By increasing the ink ejection amount of the inkjet head, a layer having a thickness equivalent to two layers can be formed through one scanning process.

A region is a portion of the object, or a portion of a three-dimensional space having a predetermined thickness in the normal direction of the surface of the object 310. Three-dimensional scanning is a scanning function of the building apparatus required for forming the object, and is mechanical or electrical scanning in three directions orthogonal to one another.

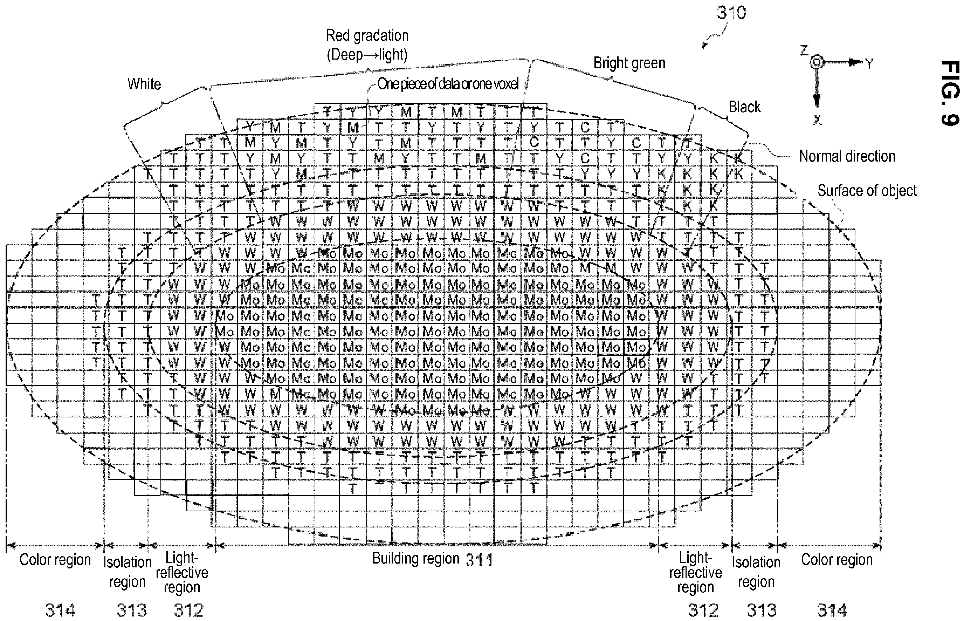

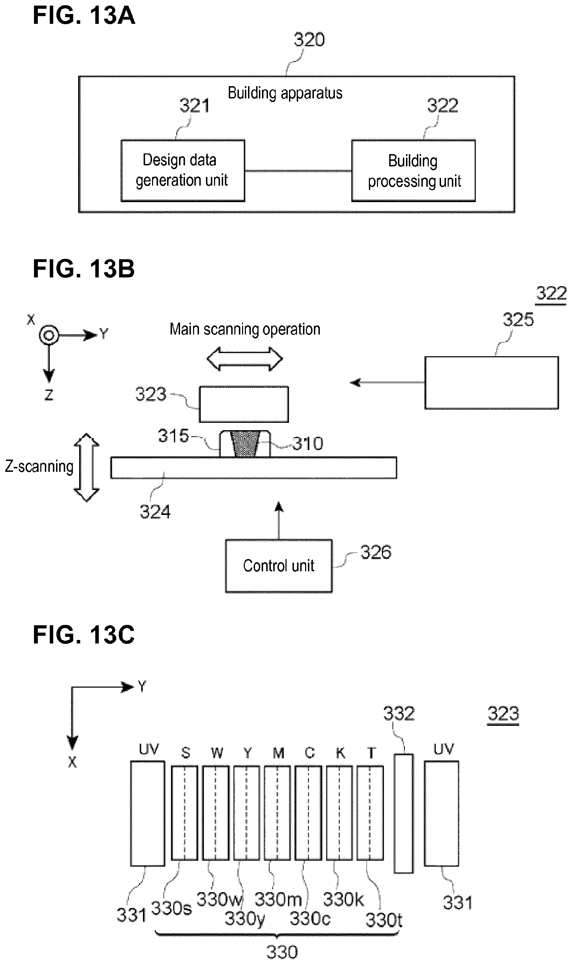

Subsequently, the following describes the color region 314 according to the present embodiment. Fig. 9 is a diagram for explaining a slice surface of the object illustrated in Fig. 6B, and illustrates the color and the type of the ink constituting the slice surface illustrated in Fig. 6B. As illustrated in Fig. 9, the cross section of the object 310 has an elliptical shape, and an outer edge of the color region 314, the isolation region 313, the light-reflective region 312, and the building region 311 also has an elliptical shape. A support layer 315 illustrated in Fig. 13B is not illustrated in Fig. 9.

In the color region 314, the ink of "C (cyan)", "M (magenta)", "Y (yellow)", "K (black)", and "T (transparent)" is arranged in a manner that represents a desired color. For example, in a portion of red gradation, "M" and "Y" are arranged on the left side of the portion, and "T" is gradually increased toward the right side. Due to this, gradation is represented such that a red color is caused to be gradually lighter from the left side to the right side. In a portion of a light green color, "C", "Y", and "T" are arranged. In a portion of "black", "K" is arranged. In this way, the color region 314 designs the color of the ink to be used for each position in accordance with the color to be represented to perform appropriate color representation. In a portion that is desired to be seen as "white" in the color region 314, the ink of "T" is arranged, and "W (white)" of the light-reflective region inside the color region 314 is caused to be seen.

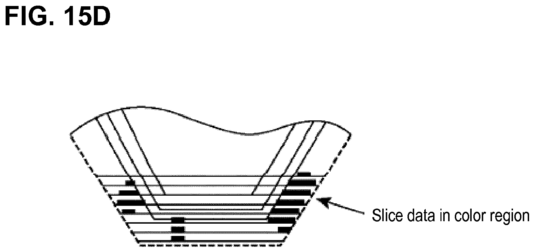

For convenience, in the description of the color region 314 in Fig. 9, the color data is described using the change in a tangential direction of the surface of the object 310, but actually, the color data change in a three-dimensional space. Thus, the color data is varied in a direction from the surface of the object 310 to the inside of the object 310 as illustrated in Fig. 15D. For representing the color, similarly to a two-dimensional inkjet printer, arrangement of the ink of respective colors is determined by performing an arithmetic operation using error diffusion, dithering, FM screening, and the like within a plane of the color region 314.

The color can be represented by causing, for example, 8 voxels of 2×2×2 to be one cell, and arranging the ink of different colors therein. However, the ink can be arranged only within the cell, so that the number of colors that can be represented is small. Specifically, combinations obtained by arranging three colors of "C", "M", and "Y" in 8 voxels are limited to 45 colors. On the other hand, there is no limitation, like the cell, on error diffusion, dithering, and the FM screening according to the present embodiment, so that a larger number of colors can be represented.

The light-reflective region 312 is arranged further inside the color region 314 in the normal direction of the surface of the object 310, and has a configuration in which the ink of "W" is arranged. The light-reflective region 312 has a thickness equal to or greater than a certain level so that visible light entered from the outside is securely reflected. To obtain a uniform color characteristic of the object, the light-reflective region 312 preferably has a uniform thickness in the normal direction irrespective of the position on the surface of the object 310, similarly to the color region 314. The isolation region 313 constituted of the ink of "T" is arranged between the light-reflective region 312 and the color region 314. The isolation region 313 functions to isolate the light-reflective region 312 from the color region 314 to prevent the color of the color ink from being lost due to mixing of the ink between the light-reflective region 312 and the color region 314. Similarly to the color region 314 and the light-reflective region 312, the isolation region 313 preferably has a uniform thickness in the normal direction.

Next, the following describes the thickness of the color region 314. The color region 314 has a constant thickness in the normal direction of the surface, and color representation with constant quality is implemented on the entire object 310. The thickness of the color region 314 is at least twice the resolution pitch in the normal direction. Thus, visible light incident on the surface of the object 310 and reflected by the light-reflective region 14 to be emitted is necessarily transmitted through two or more voxels. By appropriately selecting the color constituting the voxel through which the light is transmitted, color representation can be variously performed. The following describes a configuration having a thickness that is at least twice the resolution pitch in the normal direction in detail.

Light from various directions is incident on the object 310. In the present specification, description is made while assuming visible light that is perpendicularly incident on the surface of the object 310. This is because a distance to the light-reflective region 312 is the shortest when the light is perpendicularly incident on the surface of the object 310, and the reflected light is strong accordingly, so that contribution to the surface color is large.

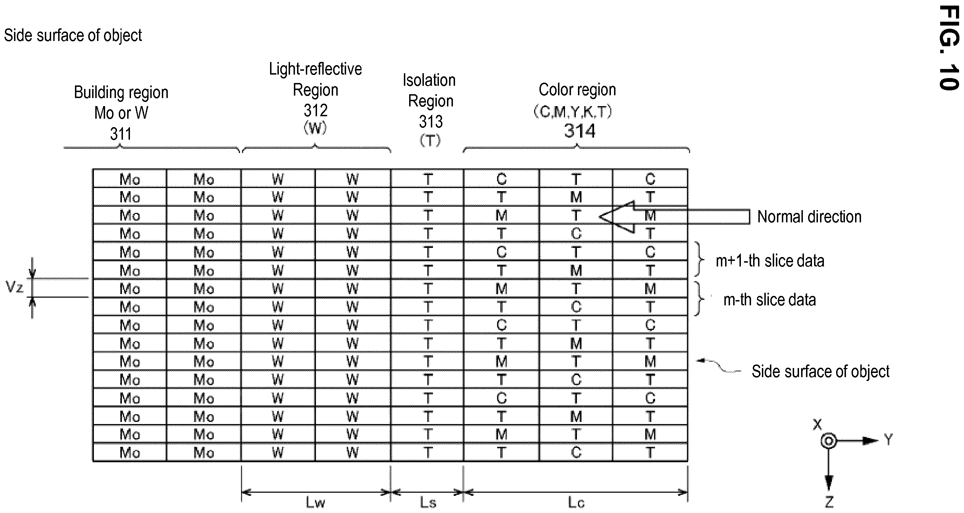

Fig. 10 is a diagram illustrating a perpendicular portion of the side surface of the object in detail, the object being viewed from a horizontal direction (X-direction). As illustrated in Fig. 10, light parallel with a deposition surface enters from the side surface of the object 310. In the example illustrated in Fig. 10, the color region 314 has a thickness that is three times the resolution pitch, so that three voxels are arranged in the normal direction in the color region 314, and the light incident on the object 310 passes through the 3 voxels.

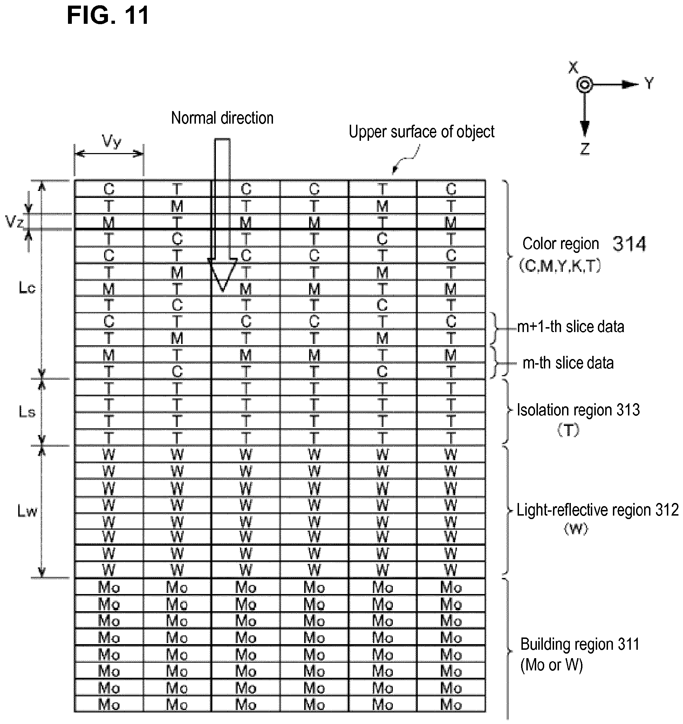

Fig. 11 is a diagram illustrating an upper surface portion of the object in detail, the object 310 being viewed from the horizontal direction (X-direction). As illustrated in Fig. 11, the light perpendicular to the deposition surface enters from the upper surface of the object 310. In the example illustrated in Fig. 11, the color region 314 has a thickness that is three times the resolution pitch, and an aspect (length-to-width) ratio of the voxel is 1:4, so that 12 voxels are arranged in the normal direction in the color region 314, and the light incident on the object 310 passes through the 12 voxels. Typically, when the thickness in the normal direction of the color region 314 is represented to be a thickness that is N times the resolution pitch (= N voxels), a range of a value taken as N is a range of the aspect ratio. Thus, in the above example, the thickness is three times the resolution pitch (= 3 voxels) in Fig. 10, so that the thickness becomes four times the former thickness in aspect ratio in Fig. 11, that is, the thickness is 12 times the resolution pitch (= 12 voxels). In other words, the resolution pitch is different in three-dimensional directions, so that, when the thickness (dimension) in the normal direction of the color region 314 is assumed to be constant, the number of resolution pitches in the constant thickness is different in the three-dimensional directions.

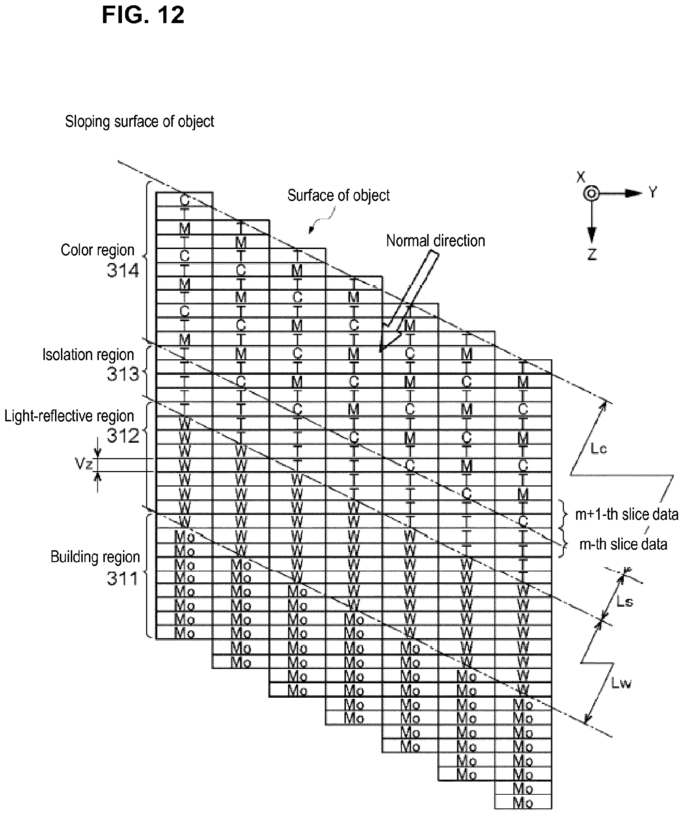

Fig. 12 is a diagram illustrating a sloping portion of the surface of the object 310 in detail, the object 310 being viewed from the horizontal direction (X-direction). As illustrated in Fig. 12, from a sloping surface of the object 310, light perpendicular to the sloping surface enters. Accordingly, in the example illustrated in Fig. 12, the light incident on the object obliquely passes through 8 to 9 voxels, for example, in a range between Fig. 10 and Fig. 11.

As illustrated in Figs. 10 to 12, in a case in which the thickness of the color region 314 is three times the resolution pitch, the light incident on the object 310 passes through at least three or more voxels. Accordingly, by appropriately selecting the colors of a plurality of voxels, various colors can be represented by subtractive color mixing. Typically, in a case in which the thickness of the color region 314 is n times the resolution pitch, n ≥ 2 is preferably satisfied to represent color gradation by subtractive color mixing. The value of n is preferably large to obtain a larger number of gradations with the arrangement of color ink in a plane direction in error diffusion, dithering, FM screening, and the like, but a thickness Lc of the color region 314 is increased if the value of n is too large, so that the resolution is reduced.

As illustrated in Figs. 10 to 12, the number of voxels in the thickness (normal) direction in the color region 314 changes depending on an angle of the surface of the object 310, but the thickness Lc of the color region 314 remains the same, being constant regardless of the angle, so that the same color is not caused to be varied depending on the angle of the surface. That is, when a mixing ratio of pieces of color ink is the same within the constant thickness in subtractive color mixing, appearance of color does not depend on the number of voxels. For example, the side surface in Fig. 10 constituted of 2 voxels of cyan (C), 1 voxel of magenta (M), and 3 voxels of transparent (T) seems to have the same color as the upper surface in Fig. 11 constituted of 8 voxels of cyan (C), 4 voxels of magenta (M), and 12 voxels of transparent (T). Similarly, a thickness Lw of the light-reflective region 312 and a thickness Ls of the isolation region are preferably constant in view of reducing color unevenness.

### Configuration of building apparatus

Next, the following describes a building apparatus 320 that manufactures the object described above. Fig. 13A is a diagram illustrating the configuration of the building apparatus 320 according to the present embodiment. The building apparatus 320 includes a design data generation unit 321 that generates design data, and a building processing unit 322 that deposits the UV ink to generate the object 310 based on the design data. To constitute the object 310 including the color region 314 having the constant thickness as described above based on data of external appearance and the like obtained by photographing the object 310 to be manufactured, the design data generation unit 321 has a function of obtaining ink information indicating the color of the ink to be arranged for each position in each layer. A detailed configuration of the design data generation unit 321 will be described later.

Fig. 13B is a diagram illustrating the configuration of the building processing unit 322. The building processing unit 322 is a device that builds the three-dimensional object 310 by additive manufacturing by ejecting the UV ink. The building processing unit 322 includes a head 323, a stage 324, a scanning driver 325, and a control unit 326.

The head 323 is a portion that ejects droplets as a material of the object 310, and ejects the UV ink to be cured to overlap layers constituting the object 310 to be formed. The head 323 includes a plurality of inkjet heads 330, a UV light source 331, and a flattening roller 332.

The head 323 can also form the support layer 315 around the object 310. The support layer 315 is, for example, a deposition structure that supports the object 310 by surrounding an outer circumference of the object 310 being built. The support layer 315 is formed as needed at the time of building the object 310, and removed after the building is completed. A more specific configuration of the head 323 will be described later in detail.

The stage 324 is a table-like member on which the object 310 being built is placed, and arranged at a position opposed to the inkjet head 330 in the head 323. The stage 324 has a configuration in which at least an upper surface thereof can move vertically in the deposition direction. When being driven by the scanning driver 325, the stage 324 causes at least the upper surface thereof to move following the progress of building of the object 310. In this example, the deposition direction is a direction (Z-direction in the drawing) orthogonal to the main scanning direction (Y-direction in the drawing) and the sub scanning direction (X-direction in the drawing) set in advance for the building processing unit 322.

The scanning driver 325 is a driver that causes the head 323 to perform a scanning operation of moving relative to the object 310. The scanning driver 325 causes the head 323 to perform, as the scanning operation, the main scanning operation (Y-scanning), the sub scanning operation (X-scanning), and the deposition-direction scanning (Z-scanning). The main scanning operation is an operation of ejecting the ink from the head 323 while causing the head 323 to move in the main scanning direction (Y-direction). At the time of main scanning operation, the scanning driver 325 further causes the UV light source 331 in the head 323 to be driven. Specifically, the scanning driver 325 turns on the UV light source 331 at the time of main scanning operation to cause the ink landed on the surface to be deposited of the object 310 to be cured. The surface to be deposited of the object 310 is, for example, a surface on which the next layer of the ink is formed by the head 323.

The sub scanning operation is an operation of causing the head 323 to move relative to the stage 324 in the sub scanning direction (X-direction). The sub scanning operation may be an operation of causing the head 323 to move relative to the stage 324 in the sub scanning direction by a feeding amount set in advance. The scanning driver 325 causes the head 323 to perform the sub scanning operation by causing the stage 324 to move while fixing the position of the head 323 in the sub scanning direction during the main scanning operation.

The deposition-direction scanning is an operation of causing the head 323 to move relative to the stage 324 in the deposition direction (Z-direction). For example, the scanning driver 325 causes the head 323 to perform the deposition-direction scanning by causing at least one of the head 323 and the stage 324 to move in the deposition direction. In this example, for example, the scanning driver 325 causes the stage 324 to move while fixing the position of the head 323 in the deposition direction. Due to this, a distance between the inkjet head 330 and the stage 324 in the head 323 is varied. This distance may be a distance between a nozzle face on which a nozzle is formed in the inkjet head 330 and the upper surface of the stage 324.

The control unit 326 is, for example, a CPU of the building processing unit 322, and controls respective units of the building processing unit 322 to control the building operation of the object 310. The CPU of the building processing unit 322 may also function as a CPU of the design data generation unit 321. The control unit 326 controls each unit of the building processing unit 322 based on the design data generated by the design data generation unit 321. Accordingly, the building processing unit 322 overlaps materials used for building in the deposition direction to build the object 310 by additive manufacturing.

Fig. 13C illustrates an example of a detailed configuration of the head 323. In this example, the head 323 includes a plurality of inkjet heads 330, a plurality of UV light sources 331, and the flattening roller 332. As illustrated in the drawing, as a plurality of inkjet heads 330, the head 323 includes an inkjet head 330s, an inkjet head 330w, an inkjet head 330y, an inkjet head 330m, an inkjet head 330c, an inkjet head 330k, and an inkjet head 330t (hereinafter, these inkjet heads are collectively referred to as "inkjet heads 330s to 330t").

The respective inkjet heads 330s to 330t are inkjet heads that eject the UV ink, and are arranged side by side in the main scanning direction while the positions thereof are aligned in the sub scanning direction. Each of the inkjet heads 330s to 330t includes, on a surface opposed to the stage 324, a nozzle array in which a plurality of nozzles are arranged side by side in the sub scanning direction. Due to this, each of the inkjet heads 330s to 330t ejects the ink in a direction toward the stage 324.

The inkjet head 330s is an inkjet head that ejects the ink as a material of the support layer 315. As the material of the support layer 315, a water-soluble material that can be dissolved in water after the object 310 is built can be preferably used.

The inkjet head 330w is an inkjet head that ejects ink of white (W). The white ink is, for example, used in a case of forming a light-reflective region in the object 310. Each of the inkjet heads 330y, 330m, 330c, and 330k (hereinafter, these inkjet heads are collectively referred to as "inkjet heads 330y to 330k") is an example of a head for coloring that ejects a material for coloring the object 310, and ejects ink for coloring of different colors. In this case, the ink for coloring is an example of the material for coloring used for coloring the object 310 in a case of building the colored object 310. The ink for coloring is ink of each process color used for color representation (for example, full-color representation). In this example, the respective inkjet heads 330y to 330k eject the UV ink of respective colors, that is, Y (yellow), M (magenta), C (cyan), and K (black).

The inkjet head 330t is an inkjet head that ejects clear ink. In this case, the clear ink means ink of clear color, that is, a colorless transparent color (T), for example.

Arrangement of the inkjet heads 330s to 330t, the types of the inkjet heads included in the head 323, and the like are not limited to the configuration illustrated in the drawing, and may be variously modified. Some inkjet heads may be arranged while shifting the positions thereof in the sub scanning direction from the other inkjet heads. The head 323 may further include inkjet heads and the like for a pale shade of each color, R (red), G (green), B (blue), orange, and the like.

The UV light sources 331 generate ultraviolet light that cures the UV ink. As the UV light source 331, an ultraviolet LED (UVLED) and the like can be preferably used. As the UV light source 331, a metal halide lamp, a mercury lamp, and the like may be used. In this example, the respective UV light sources 331 are arranged at one end side and the other end side of the main scanning direction of the head 323 to hold the inkjet heads 330s to 330t therebetween.

The flattening roller 332 has a configuration of flattening the layer of the ink formed when the object 310 is being built. In this example, the flattening roller 332 is arranged between the inkjet head 330 and the UV light source 331. The flattening roller 332 removes part of the ink before curing by being in contact with the surface of the layer of the ink at the time of main scanning operation, for example, to flatten the layer of the ink and form a thickness of one layer.

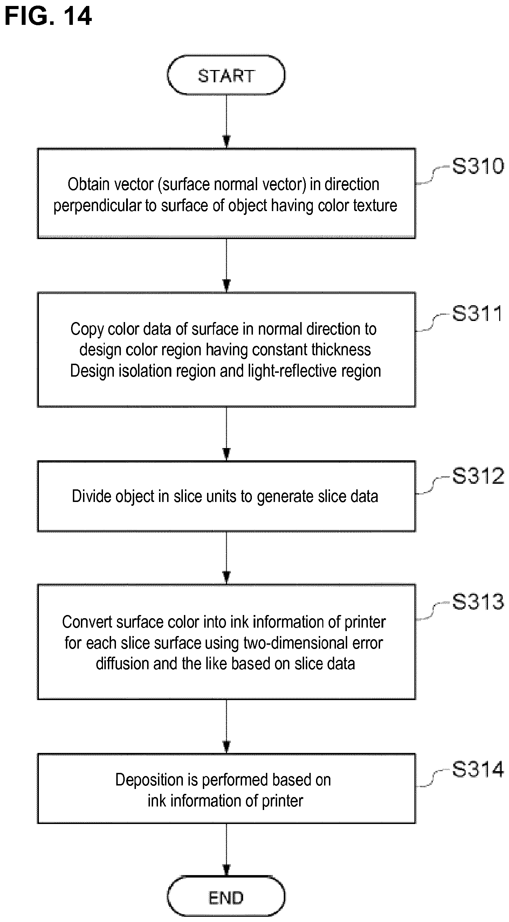

Fig. 14 is a diagram illustrating an operation of building the object 310 performed by the building apparatus 320 according to the present embodiment. From Step S310 to Step S313 are operations of the design data generation unit 321, and Step 14 is an operation of the building processing unit 322. With reference to Fig. 14, the following describes the operation of the building apparatus 320, and also describes a function of the design data generation unit 321.

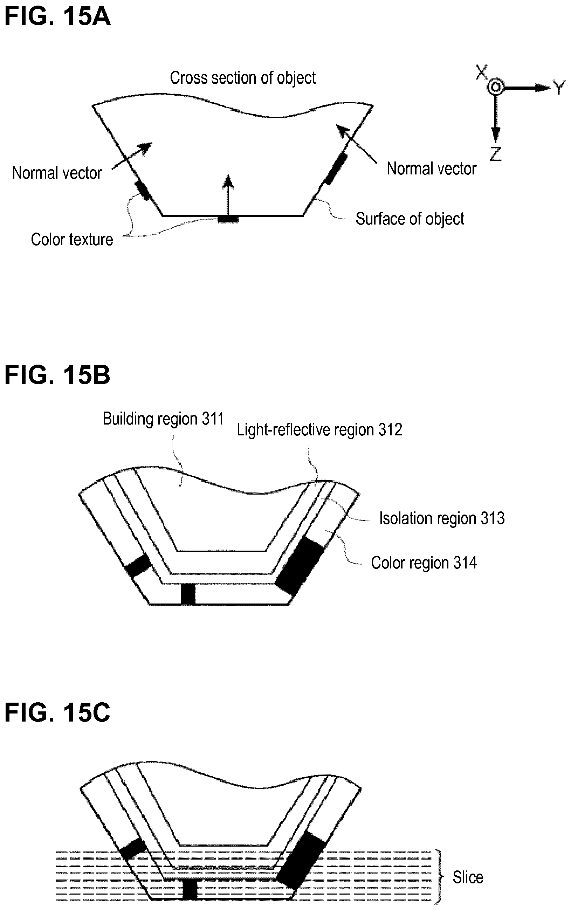

The design data generation unit 321 of the building apparatus 320 first obtains a vector (surface normal vector) in a direction perpendicular to the surface of the object having a color texture based on image data and the like obtained by photographing external appearance of the object to be manufactured (S310). Figs. 15A to 15D are diagrams illustrating an example of design data generated through the operation illustrated in Fig. 14. Fig. 15A is a diagram illustrating an example of obtaining a normal vector on the surface of the object having a color texture.

Next, the design data generation unit 321 copies the color data of the object surface in the normal direction to design the color region 314 having a constant thickness. The design data generation unit 321 generates the isolation region 313 and the light-reflective region 312 inside the color region 314 (S311). Fig. 15B is a diagram illustrating a state in which the color region 314, the isolation region 313, and the light-reflective region 312 are designed.

Causing the thickness of the color region 314 to be constant may mean causing the thickness of the color region 314 to be constant except some exceptional positions. Depending on the shape of the object to be built, part of the color region 314 may have a thickness out of the permissible range. For example, as illustrated in Fig. 15B, in a case of building the object having a shape in which the lower surface intersects with the side surface, the thickness of the color region 314 in the normal direction is permitted to be deviated from the constant thickness in the vicinity of a region in which the lower surface intersects with the side surface.

Subsequently, the design data generation unit 321 divides the object 310 in slice units to generate the slice data (S312). Figs. 15C and 15D are diagrams illustrating that the slice data is obtained by dividing, in slice units, the object in which the color region 314 and the like are defined. The slice data defines which portion is the color region 314 and which portion is the light-reflective region 312 in each slice, and defines which portion should be colored by which color for the color region 314.

For each slice, the design data generation unit 321 converts data of the color region 314 in the slice into color ink information of a printer by using two-dimensional error diffusion and the like, and converts the isolation region 313, the light-reflective region 312, the building region 311, and the support layer 315 (not illustrated) into ink information thereof (S313). An example of the ink information of one layer is described above with reference to Fig. 9.

Next, the building processing unit 322 repeatedly performs processing of ejecting the UV ink as the building material from the inkjet head 330 to be deposited based on the ink information generated by the design data generation unit 321 to manufacture the object (S314). The building method, and the building apparatus 320 according to the embodiment of the present invention have been described above.

### INDUSTRIAL APPLICABILITY

The present invention is useful as a building method and the like by which various colors can be represented with constant quality, and building is performed using a deposition system.

The present invention can be applied to the building apparatus.

## Claims

1. A building apparatus (10, 320) for building a three-dimensional object (50, 310), the building apparatus (10, 320) comprising:
a material ejection unit (12) configured to eject a material used for building the object (50, 310); and
a control unit (20, 326) configured to control an operation of the material ejection unit (12), wherein
the material ejection unit (12) is configured to eject at least a material for coloring used for coloring the object (50, 310) in a case of building an object (50, 310) that is colored,
in a case of building the colored object (50, 310), the material ejection unit (12) is configured to form at least a colored region that is a layer region along a surface shape of the object (50, 310) to be built and is colored with the material for coloring, and
the control unit (20, 326) is configured to cause the material ejection unit (12) to form the colored region so that in a normal direction of the object (50, 310), which is a direction perpendicular to the surface of the object (50, 310), the colored region has a constant thickness set in advance,
wherein:
the building apparatus (10, 320) is able to build the object (50, 310) colored to include a text or a graphic drawn with material for coloring having a different color from a surrounding color on a surface of the object (50, 310), **characterised in that**,
in a case of building an object (50, 310) that is colored to include the text or the graphic, the control unit (20, 326) is configured to cause the material ejection unit (12) to form the colored region so that a width of each part of the text or the graphic in a direction parallel with the surface of the object (50, 310) is constant at each position in the normal direction in the colored region.

2. A building apparatus (10, 320) for building a three-dimensional object (50, 310), the building apparatus (10, 320) comprising:
a material ejection unit (12) configured to eject a material used for building the object (50, 310); and
a control unit (20, 326) configured to control an operation of the material ejection unit (12), wherein
the material ejection unit (12) is configured to eject at least a material for coloring used for coloring the object (50, 310) in a case of building an object (50, 310) that is colored,
in a case of building the colored object (50, 310), the material ejection unit (12) is configured to form at least a colored region that is a layer region along a surface shape of the object (50, 310) to be built and is colored with the material for coloring, and
the control unit (20, 326) is configured to cause the material ejection unit (12) to form the colored region so that in a normal direction of the object (50, 310), which is a direction perpendicular to the surface of the object (50, 310), the colored region has a constant thickness set in advance,
wherein:
the building apparatus (10, 320) is able to build the object (50, 310) colored to include a text or a graphic drawn with material for coloring having a different color from a surrounding color within the surface of the object (50, 310), **characterised in that**,
in a case of building an object (50, 310) that is colored to include the text or the graphic, the control unit (20, 326) is configured to cause the material ejection unit (12) to form the colored region, so that a width of each part of the text or the graphic in a direction parallel with the surface of the object (50, 310) on the outermost side of the object (50, 310) is larger than the width on the innermost side of the object (50, 310).

3. A building apparatus (10, 320) for building a three-dimensional object (50, 310), the building apparatus (10, 320) comprising:
a material ejection unit (12) configured to eject a material used for building the object (50, 310); and
a control unit (20, 326) configured to control an operation of the material ejection unit (12), wherein
the material ejection unit (12) is configured to eject at least a material for coloring used for coloring the object (50, 310) in a case of building an object (50, 310) that is colored,
in a case of building the colored object (50, 310), the material ejection unit (12) is configured to form at least a colored region that is a layer region along a surface shape of the object (50, 310) to be built and is colored with the material for coloring, and
the control unit (20, 326) is configured to cause the material ejection unit (12) to form the colored region so that in a normal direction of the object (50, 310), which is a direction perpendicular to the surface of the object (50, 310), the colored region has a constant thickness set in advance,
wherein:
the building apparatus (10, 320) is able to build the object (50, 310) colored to include a text or a graphic drawn with material for coloring having a different color from a surrounding color within the surface of the object (50, 310), **characterised in that**,
in a case of building an object (50, 310) that is colored to include the text or the graphic, the control unit (20, 326) is configured to cause the material ejection unit (12) to form the colored region, so that a width of each part of the text or the graphic in a direction parallel with the surface of the object (50, 310) on the outermost side of the object (50, 310) is smaller than the width on the innermost side of the object (50, 310).

4. The building apparatus (10, 320) according to claim 1 - 3, wherein
when building the colored object (50, 310), the building apparatus (10, 320) is configured to build the object (50, 310) including at least an inside region constituting the inside and the colored region surrounding an outer side of the inside region,
the material ejection unit (12) includes:
a head (102w; 330w) for inside building as an ejection head that ejects a material for forming the inside region; and
a head (102y to 102k; 330y to 330k) for coloring as an ejection head that ejects the material for coloring, and
the control unit (20, 326) causes at least the head (102y to 102k; 330y to 330k) for coloring to eject the material for coloring to cause the material ejection unit (12) to form the colored region.

5. The building apparatus (10, 320) according to claim 4, wherein
the head (102w; 330w) for inside building and the head (102y to 102k; 330y to 330k) for coloring are ink-jet heads that eject ink by inkjet, and
the material for forming the inside region and the material for coloring are each a UV curable ink that is cured by being irradiated with ultraviolet light.

6. The building apparatus (10, 320) according to any one of claims 1 to 5, wherein
the building apparatus (10, 320) is configured to build the object (50, 310) by layering the material used for building in a deposition direction set in advance,
the object (50, 310) includes at least a lower surface as a surface on a lower side in the deposition direction and a side surface intersecting with the lower surface, and
the control unit (20, 326) is configured to permit the thickness of the colored region in the normal direction to be deviated from the constant thickness in the vicinity of a region in which the lower surface intersects with the side surface, and to cause the material ejection unit (12) to form a colored region so that the colored region along the lower surface is continuous to the colored region along the side surface.

7. A building method for building a three-dimensional object (50, 310), by controlling an operation of a material ejection unit (12) that ejects a material used for building the object (50, 310), the method comprising:
causing the material ejection unit (12) to eject at least a material for coloring used for coloring the object (50, 310) in a case of building an object (50, 310) that is colored,
in a case of building the colored object (50, 310), causing the material ejection unit (12) to form at least a colored region that is a layer region along a surface shape of the object (50, 310) to be built and that is a region colored with the material for coloring, and
causing the material ejection unit (12) to form the colored region so that in the normal direction of the object (50, 310) as a direction perpendicular to the surface of the object (50, 310), the colored region has a constant thickness set in advance,
**characterised in that** the building apparatus (10, 320):
builds the object (50, 310) colored to include a text or a graphic drawn with material for coloring having a different color from a surrounding color on a surface of the object (50, 310), and
causes the material ejection unit (12) to form the colored region so that a width of each part of the text or the graphic in a direction parallel with the surface of the object (50, 310) is constant at each position in the normal direction in the colored region.

8. A building method for building a three-dimensional object (50, 310), by controlling an operation of a material ejection unit (12) that ejects a material used for building the object (50, 310), the method comprising:
causing the material ejection unit (12) to eject at least a material for coloring used for coloring the object (50, 310) in a case of building an object (50, 310) that is colored,
in a case of building the colored object (50, 310), causing the material ejection unit (12) to form at least a colored region that is a layer region along a surface shape of the object (50, 310) to be built and that is a region colored with the material for coloring, and
causing the material ejection unit (12) to form the colored region so that in the normal direction of the object (50, 310) as a direction perpendicular to the surface of the object (50, 310), the colored region has a constant thickness set in advance,
**characterised in that** the building apparatus (10, 320):
builds the object (50, 310) colored to include a text or a graphic drawn with material for coloring having a different color from a surrounding color within the surface of the object (50, 310), and
causes the material ejection unit (12) to form the colored region, so that a width of each part of the text or the graphic in a direction parallel with the surface of the object (50, 310) on the outermost side of the object (50, 310) is larger than the width on the innermost side of the object (50, 310).

9. A building method for building a three-dimensional object (50, 310), by controlling an operation of a material ejection unit (12) that ejects a material used for building the object (50, 310), the method comprising:
causing the material ejection unit (12) to eject at least a material for coloring used for coloring the object (50, 310) in a case of building an object (50, 310) that is colored,
in a case of building the colored object (50, 310), causing the material ejection unit (12) to form at least a colored region that is a layer region along a surface shape of the object (50, 310) to be built and that is a region colored with the material for coloring, and
causing the material ejection unit (12) to form the colored region so that in the normal direction of the object (50, 310) as a direction perpendicular to the surface of the object (50, 310), the colored region has a constant thickness set in advance,
**characterised in that** the building apparatus (10, 320):
builds the object (50, 310) colored to include a text or a graphic drawn with material for coloring having a different color from a surrounding color within the surface of the object (50, 310), and
causes the material ejection unit (12) to form the colored region, so that a width of each part of the text or the graphic in a direction parallel with the surface of the object (50, 310) on the outermost side of the object (50, 310) is smaller than the width on the innermost side of the object (50, 310).

## Patentansprüche

1. Bauvorrichtung (10, 320) zum Bauen eines dreidimensionalen Objekts (50, 310), wobei die Bauvorrichtung (10, 320) aufweist:
eine Materialausstoßeinheit (12), die geeignet ist, ein zum Bauen des Objekts (50, 310) verwendetes Material auszustoßen; und
eine Steuereinheit (20, 326), die geeignet ist, einen Betrieb der Materialausstoßeinheit (12) zu steuern, wobei
die Materialausstoßeinheit (12) geeignet ist, zumindest ein Material zum Färben auszustoßen, das zum Färben des Objekts (50, 310) verwendet wird, im Fall eines Baus eines gefärbten Objekts (50, 310),
im Fall des Baus des gefärbten Objekts (50, 310) die Materialausstoßeinheit (12) geeignet ist, mindestens einen gefärbten Bereich zu bilden, der ein Schichtbereich entlang einer Oberflächenform des zu bauenden Objekts (50, 310) ist, wobei der gefärbte Bereich mit dem Material zum Färben gefärbt ist, und
die Steuereinheit (20, 326) geeignet ist, die Materialausstoßeinheit (12) zu veranlassen, den gefärbten Bereich so zu bilden, dass der gefärbte Bereich in einer normalen Richtung des Objekts (50, 310), die eine Richtung senkrecht zur Oberfläche des Objekts (50, 310) ist, eine im Voraus bestimmte konstante Dicke aufweist,
wobei:
die Bauvorrichtung (10, 320) in der Lage ist, das Objekt (50, 310) zu bauen, das gefärbt ist, um einen Text oder eine Grafik einzuschließen, der/die mit Material zum Färben gemalt ist, das eine andere Farbe als eine Umgebungsfarbe auf einer Oberfläche des Objekts (50, 310) hat, **dadurch gekennzeichnet, dass**,
im Fall des Baus eines Objekts (50, 310), das gefärbt ist, um den Text oder die Grafik einzuschließen, die Steuereinheit (20, 326) geeignet ist, die Materialausstoßeinheit (12) zu veranlassen, den gefärbten Bereich so zu bilden, dass eine Breite jedes Teils des Textes oder der Grafik in einer Richtung parallel zu der Oberfläche des Objekts (50, 310) an jeder Position in der normalen Richtung in dem gefärbten Bereich konstant ist.

2. Bauvorrichtung (10, 320) zum Bauen eines dreidimensionalen Objekts (50, 310), wobei die Bauvorrichtung (10, 320) aufweist:
eine Materialausstoßeinheit (12), die geeignet ist, ein zum Bauen des Objekts (50, 310) verwendetes Material auszustoßen; und
eine Steuereinheit (20, 326), die geeignet ist, einen Betrieb der Materialausstoßeinheit (12) zu steuern, wobei
die Materialausstoßeinheit (12) geeignet ist, zumindest ein Material zum Färben auszustoßen, das zum Färben des Objekts (50, 310) verwendet wird, im Fall eines Baus eines gefärbten Objekts (50, 310),
im Fall des Baus des gefärbten Objekts (50, 310) die Materialausstoßeinheit (12) geeignet ist, mindestens einen gefärbten Bereich zu bilden, der ein Schichtbereich entlang einer Oberflächenform des zu bauenden Objekts (50, 310) ist, wobei der gefärbte Bereich mit dem Material zum Färben gefärbt ist, und
die Steuereinheit (20, 326) geeignet ist, die Materialausstoßeinheit (12) zu veranlassen, den gefärbten Bereich so zu bilden, dass der gefärbte Bereich in einer normalen Richtung des Objekts (50, 310), die eine Richtung senkrecht zur Oberfläche des Objekts (50, 310) ist, eine im Voraus bestimmte konstante Dicke aufweist,
wobei:
die Bauvorrichtung (10, 320) in der Lage ist, das Objekt (50, 310) zu bauen, das gefärbt ist, um einen Text oder eine Grafik einzuschließen, der/die mit Material zum Färben gemalt ist, das eine andere Farbe als eine Umgebungsfarbe auf einer Oberfläche des Objekts (50, 310) hat, **dadurch gekennzeichnet, dass**,
im Fall des Baus eines Objekts (50, 310), das gefärbt ist, um den Text oder die Grafik einzuschließen, die Steuereinheit (20, 326) geeignet ist, die Materialausstoßeinheit (12) zu veranlassen, den gefärbten Bereich so zu bilden, dass eine Breite jedes Teils des Textes oder der Grafik in einer Richtung parallel zu der Oberfläche des Objekts (50, 310) auf der äußersten Seite des Objekts (50, 310) größer ist als die Breite auf der innersten Seite des Objekts (50, 310).

3. Bauvorrichtung (10, 320) zum Bauen eines dreidimensionalen Objekts (50, 310), wobei die Bauvorrichtung (10, 320) aufweist:
eine Materialausstoßeinheit (12), die geeignet ist, ein zum Bauen des Objekts (50, 310) verwendetes Material auszustoßen; und
eine Steuereinheit (20, 326), die geeignet ist, einen Betrieb der Materialausstoßeinheit (12) zu steuern, wobei
die Materialausstoßeinheit (12) geeignet ist, zumindest ein Material zum Färben auszustoßen, das zum Färben des Objekts (50, 310) verwendet wird, im Fall eines Baus eines gefärbten Objekts (50, 310),
im Fall des Baus des gefärbten Objekts (50, 310) die Materialausstoßeinheit (12) geeignet ist, mindestens einen gefärbten Bereich zu bilden, der ein Schichtbereich entlang einer Oberflächenform des zu bauenden Objekts (50, 310) ist und mit dem Material zum Färben gefärbt ist, und
die Steuereinheit (20, 326) geeignet ist, die Materialausstoßeinheit (12) zu veranlassen, den gefärbten Bereich so zu bilden, dass der gefärbte Bereich in einer normalen Richtung des Objekts (50, 310), die eine Richtung senkrecht zur Oberfläche des Objekts (50, 310) ist, eine im Voraus bestimmte konstante Dicke aufweist,
wobei:
die Bauvorrichtung (10, 320) in der Lage ist, das Objekt (50, 310) zu bauen, das gefärbt ist, um einen Text oder eine Grafik einzuschließen, der/die mit Material zum Färben gemalt ist, das eine andere Farbe als eine Umgebungsfarbe auf einer Oberfläche des Objekts (50, 310) hat, **dadurch gekennzeichnet, dass**,
im Fall des Baus eines Objekts (50, 310), das gefärbt ist, um den Text oder die Grafik einzuschließen, die Steuereinheit (20, 326) geeignet ist, die Materialausstoßeinheit (12) zu veranlassen, den gefärbten Bereich so zu bilden, dass eine Breite jedes Teils des Textes oder der Grafik in einer Richtung parallel zu der Oberfläche des Objekts (50, 310) auf der äußersten Seite des Objekts (50, 310) kleiner ist als die Breite auf der innersten Seite des Objekts (50, 310).

4. Bauvorrichtung (10, 320) nach Anspruch 1 - 3, wobei
die Bauvorrichtung (10, 320) beim Bau des gefärbten Objekts (50, 310) geeignet ist, das Objekt (50, 310), das mindestens einen Innenbereich, der die Innenseite bildet, und den gefärbten Bereich, der eine Außenseite des Innenbereichs umgibt, umfasst, zu bauen,
die Materialausstoßeinheit (12) aufweist:
einen Kopf (102w; 330w) zum Innenbau als einen Ausstoßkopf, der ein Material zum Bilden des Innenbereichs ausstößt; und
einen Kopf (102y bis 102k; 330y bis 330k) zum Färben als einen Ausstoßkopf, der das Material zum Färben ausstößt, und
die Steuereinheit (20, 326) zumindest den Kopf (102y bis 102k; 330y bis 330k) zum Färben veranlasst, das Material zum Färben auszustoßen, um die Materialausstoßeinheit (12) zu veranlassen, den gefärbten Bereich zu bilden.

5. Bauvorrichtung (10, 320) nach Anspruch 4, wobei
der Kopf (102w; 330w) zum Innenbau und der Kopf (102y bis 102k; 330y bis 330k) zum Färben Tintenstrahlköpfe sind, die Tinte durch Tintenstrahl ausstoßen, und
das Material zum Bilden des Innenbereichs und das Material zum Färben jeweils eine UV-härtbare Tinte sind, die durch Bestrahlung mit ultraviolettem Licht gehärtet wird.

6. Bauvorrichtung (10, 320) nach einem der Ansprüche 1 bis 5, wobei
die Bauvorrichtung (10, 320) geeignet ist, das Objekt (50, 310) durch schichtweises Auftragen des zum Bauen verwendeten Materials in einer im Voraus festgelegten Ablagerungsrichtung zu bauen,
das Objekt (50, 310) mindestens eine untere Oberfläche als eine Oberfläche auf einer Unterseite in der Ablagerungsrichtung und eine Seitenoberfläche, die die untere Oberfläche schneidet, aufweist, und
die Steuereinheit (20, 326) geeignet ist, zuzulassen, dass die Dicke des gefärbten Bereichs in der normalen Richtung von der konstanten Dicke in der Nähe eines Bereichs, in dem die untere Oberfläche die Seitenoberfläche schneidet, abweicht, und die Materialausstoßeinheit (12) zu veranlassen, einen gefärbten Bereich zu bilden, so dass der gefärbte Bereich entlang der unteren Oberfläche kontinuierlich zu dem gefärbten Bereich entlang der Seitenoberfläche ist.

7. Bauverfahren zum Bauen eines dreidimensionalen Objekts (50, 310) durch Steuern eines Betriebs einer Materialausstoßeinheit (12), die ein Material ausstößt, das zum Bauen des Objekts (50, 310) verwendet wird, wobei das Verfahren umfasst:
Bewirken, dass die Materialausstoßeinheit (12) in einem Fall des Baus eines gefärbten Objekts (50, 310) mindestens ein Material zum Färben ausstößt, das zum Färben des Objekts (50, 310) verwendet wird,
im Fall des Baus des gefärbten Objekts (50, 310), Veranlassen der Materialausstoßeinheit (12), mindestens einen gefärbten Bereich zu bilden, der ein Schichtbereich entlang einer Oberflächenform des zu bauenden Objekts (50, 310) ist und der ein mit dem Material zum Färben gefärbter Bereich ist, und
Veranlassen der Materialausstoßeinheit (12), den gefärbten Bereich so zu bilden, dass der gefärbte Bereich in der Normalrichtung des Objekts (50, 310), die eine Richtung senkrecht zur Oberfläche des Objekts (50, 310) ist, eine im Voraus festgelegte konstante Dicke aufweist,
**dadurch gekennzeichnet, dass** die Bauvorrichtung (10, 320):
das gefärbte Objekt (50, 310) so baut, dass es einen Text oder eine Grafik enthält, der/die mit Material zum Färben gemalt ist, das eine andere Farbe als eine Umgebungsfarbe auf einer Oberfläche des Objekts (50, 310) hat, und
die Materialausstoßeinheit (12) zu veranlassen, den gefärbten Bereich so zu bilden, dass eine Breite jedes Teils des Textes oder der Grafik in einer Richtung parallel zu der Oberfläche des Objekts (50, 310) an jeder Position in der normalen Richtung in dem gefärbten Bereich konstant ist.

8. Bauverfahren zum Bauen eines dreidimensionalen Objekts (50, 310) durch Steuern eines Betriebs einer Materialausstoßeinheit (12), die ein Material ausstößt, das zum Bauen des Objekts (50, 310) verwendet wird, wobei das Verfahren umfasst:
Bewirken, dass die Materialausstoßeinheit (12) in einem Fall des Baus eines gefärbten Objekts (50, 310) mindestens ein Material zum Färben ausstößt, das zum Färben des Objekts (50, 310) verwendet wird,
im Fall des Baus des gefärbten Objekts (50, 310), Veranlassen der Materialausstoßeinheit (12), mindestens einen gefärbten Bereich zu bilden, der ein Schichtbereich entlang einer Oberflächenform des zu bauenden Objekts (50, 310) ist und der ein mit dem Material zum Färben gefärbter Bereich ist, und
Veranlassen der Materialausstoßeinheit (12), den gefärbten Bereich so zu bilden, dass der gefärbte Bereich in der Normalrichtung des Objekts (50, 310), die eine Richtung senkrecht zur Oberfläche des Objekts (50, 310) ist, eine im Voraus festgelegte konstante Dicke aufweist,
**dadurch gekennzeichnet, dass** die Bauvorrichtung (10, 320):
das gefärbte Objekt (50, 310) so baut, dass es einen Text oder eine Grafik enthält, der/die mit Material zum Färben gemalt ist, das eine andere Farbe als eine Umgebungsfarbe auf einer Oberfläche des Objekts (50, 310) hat, und
die Materialausstoßeinheit (12) zu veranlassen, den gefärbten Bereich so zu bilden, dass eine Breite jedes Teils des Textes oder der Grafik in einer Richtung parallel zur Oberfläche des Objekts (50, 310) auf der äußersten Seite des Objekts (50, 310) größer ist als die Breite auf der innersten Seite des Objekts (50, 310).

9. Bauverfahren zum Bauen eines dreidimensionalen Objekts (50, 310) durch Steuern eines Betriebs einer Materialausstoßeinheit (12), die ein Material ausstößt, das zum Bauen des Objekts (50, 310) verwendet wird, wobei das Verfahren umfasst:
Bewirken, dass die Materialausstoßeinheit (12) in einem Fall des Baus eines gefärbten Objekts (50, 310) mindestens ein Material zum Färben ausstößt, das zum Färben des Objekts (50, 310) verwendet wird,
im Fall des Baus des gefärbten Objekts (50, 310), Veranlassen der Materialausstoßeinheit (12), mindestens einen gefärbten Bereich zu bilden, der ein Schichtbereich entlang einer Oberflächenform des zu bauenden Objekts (50, 310) ist und der ein mit dem Material zum Färben gefärbter Bereich ist, und
Veranlassen der Materialausstoßeinheit (12), den gefärbten Bereich so zu bilden, dass der gefärbte Bereich in der Normalrichtung des Objekts (50, 310), die eine Richtung senkrecht zur Oberfläche des Objekts (50, 310) ist, eine im Voraus festgelegte konstante Dicke aufweist,
**dadurch gekennzeichnet, dass** die Bauvorrichtung (10, 320):
das gefärbte Objekt (50, 310) so baut, dass es einen Text oder eine Grafik enthält, der/die mit Material zum Färben gemalt ist, das eine andere Farbe als eine Umgebungsfarbe auf einer Oberfläche des Objekts (50, 310) hat, und
die Materialausstoßeinheit (12) zu veranlassen, den gefärbten Bereich so zu bilden, dass eine Breite jedes Teils des Textes oder der Grafik in einer Richtung parallel zur Oberfläche des Objekts (50, 310) auf der äußersten Seite des Objekts (50, 310) kleiner ist als die Breite auf der innersten Seite des Objekts (50, 310).

## Revendications

1. Appareil de construction (10, 320) pour construire un objet tridimensionnel (50, 310), l'appareil de construction (10, 320) comprenant :
une unité d'éjection de matériau (12) configurée pour éjecter un matériau utilisé pour construire l'objet (50, 310) ; et
une unité de commande (20, 326) configurée pour commander un fonctionnement de l'unité d'éjection de matériau (12), dans lequel
l'unité d'éjection de matériau (12) est configurée pour éjecter au moins un matériau de coloration utilisé pour colorer l'objet (50, 310) dans un cas d'une construction d'un objet (50, 310) qui est coloré,
dans un cas de construction de l'objet (50, 310) coloré, l'unité d'éjection de matériau (12) est configurée pour former au moins une région colorée qui est une région de couche le long d'une forme de surface de l'objet (50, 310) à construire et qui est colorée avec le matériau de coloration, et
l'unité de commande (20, 326) est configurée pour amener l'unité d'éjection de matériau (12) à former la région colorée de sorte que dans une direction normale de l'objet (50, 310), qui est une direction perpendiculaire à la surface de l'objet (50, 310), la région colorée a une épaisseur constante fixée à l'avance,
dans lequel :
l'appareil de construction (10, 320) est capable de construire l'objet (50, 310) coloré pour inclure un texte ou un graphique dessiné avec un matériau de coloration ayant une couleur différente d'une couleur environnante sur une surface de l'objet (50, 310), **caractérisé en ce que**,
dans un cas de construction d'un objet (50, 310) qui est coloré pour inclure le texte ou le graphique, l'unité de commande (20, 326) est configurée pour amener l'unité d'éjection de matériau (12) à former la région colorée de sorte qu'une largeur de chaque partie du texte ou du graphique dans une direction parallèle à la surface de l'objet (50, 310) est constante à chaque position dans la direction normale dans la région colorée.

2. Appareil de construction (10, 320) pour construire un objet tridimensionnel (50, 310), l'appareil de construction (10, 320) comprenant :
une unité d'éjection de matériau (12) configurée pour éjecter un matériau utilisé pour construire l'objet (50, 310) ; et
une unité de commande (20, 326) configurée pour commander un fonctionnement de l'unité d'éjection de matériau (12), dans lequel
l'unité d'éjection de matériau (12) est configurée pour éjecter au moins un matériau de coloration utilisé pour colorer l'objet (50, 310) dans un cas d'une construction d'un objet (50, 310) qui est coloré,
dans un cas de construction de l'objet (50, 310) coloré, l'unité d'éjection de matériau (12) est configurée pour former au moins une région colorée qui est une région de couche le long d'une forme de surface de l'objet (50, 310) à construire et qui est colorée avec le matériau de coloration, et
l'unité de commande (20, 326) est configurée pour amener l'unité d'éjection de matériau (12) à former la région colorée de sorte que dans une direction normale de l'objet (50, 310), qui est une direction perpendiculaire à la surface de l'objet (50, 310), la région colorée a une épaisseur constante fixée à l'avance,
dans lequel :
l'appareil de construction (10, 320) est capable de construire l'objet (50, 310) coloré pour inclure un texte ou un graphique dessiné avec un matériau de coloration ayant une couleur différente d'une couleur environnante sur une surface de l'objet (50, 310), **caractérisé en ce que**,
dans un cas de construction d'un objet (50, 310) qui est coloré pour inclure le texte ou le graphique, l'unité de commande (20, 326) est configurée pour amener l'unité d'éjection de matériau (12) à former la région colorée de sorte qu'une largeur de chaque partie du texte ou du graphique dans une direction parallèle à la surface de l'objet (50, 310) sur le côté le plus extérieur de l'objet (50, 310) est plus grande que la largeur sur le côté le plus intérieur de l'objet (50, 310).

3. Appareil de construction (10, 320) pour construire un objet tridimensionnel (50, 310), l'appareil de construction (10, 320) comprenant :
une unité d'éjection de matériau (12) configurée pour éjecter un matériau utilisé pour construire l'objet (50, 310) ; et
une unité de commande (20, 326) configurée pour commander un fonctionnement de l'unité d'éjection de matériau (12), dans lequel
l'unité d'éjection de matériau (12) est configurée pour éjecter au moins un matériau de coloration utilisé pour colorer l'objet (50, 310) dans un cas d'une construction d'un objet (50, 310) qui est coloré,
dans un cas de construction de l'objet (50, 310) coloré, l'unité d'éjection de matériau (12) est configurée pour former au moins une région colorée qui est une région de couche le long d'une forme de surface de l'objet (50, 310) à construire et qui est colorée avec le matériau de coloration, et
l'unité de commande (20, 326) est configurée pour amener l'unité d'éjection de matériau (12) à former la région colorée de sorte que dans une direction normale de l'objet (50, 310), qui est une direction perpendiculaire à la surface de l'objet (50, 310), la région colorée a une épaisseur constante fixée à l'avance,
dans lequel :
l'appareil de construction (10, 320) est capable de construire l'objet (50, 310) coloré pour inclure un texte ou un graphique dessiné avec un matériau de coloration ayant une couleur différente d'une couleur environnante sur une surface de l'objet (50, 310), **caractérisé en ce que**,
dans un cas de construction d'un objet (50, 310) qui est coloré pour inclure le texte ou le graphique, l'unité de commande (20, 326) est configurée pour amener l'unité d'éjection de matériau (12) à former la région colorée de sorte qu'une largeur de chaque partie du texte ou du graphique dans une direction parallèle à la surface de l'objet (50, 310) sur le côté le plus extérieur de l'objet (50, 310) est plus petite que la largeur sur le côté le plus intérieur de l'objet (50, 310).

4. Appareil de construction (10, 320) selon les revendications 1 à 3, dans lequel
lors de la construction de l'objet coloré (50, 310), l'appareil de construction (10, 320) est configuré pour construire l'objet (50, 310) comprenant au moins une région intérieure constituant l'intérieur et la région colorée entourant un côté extérieur de la région intérieure,
l'unité d'éjection de matériau (12) comprend :
une tête (102w ; 330w) pour la construction intérieure en tant que tête d'éjection qui éjecte un matériau pour former la région intérieure ; et
une tête (102y à 102k ; 330y à 330k) pour la coloration en tant que tête d'éjection qui éjecte le matériau de coloration, et
l'unité de commande (20, 326) fait en sorte qu'au moins la tête (102y à 102k ; 330y à 330k) pour la coloration éjecte le matériau de coloration afin d'amener l'unité d'éjection de matériau (12) à former la région colorée.

5. Appareil de construction (10, 320) selon la revendication 4, dans lequel
la tête (102w ; 330w) pour la construction intérieure et la tête (102y à 102k ; 330y à 330k) pour la coloration sont des têtes à jet d'encre qui éjectent de l'encre par jet d'encre, et
le matériau pour former la région intérieure et le matériau de coloration sont chacun une encre durcissable par UV qui est durcie en étant irradiée par une lumière ultraviolette.

6. Appareil de construction (10, 320) selon l'une quelconque des revendications 1 à 5, dans lequel
l'appareil de construction (10, 320) est configuré pour construire l'objet (50, 310) en superposant le matériau utilisé pour la construction dans une direction de dépôt définie à l'avance,
l'objet (50, 310) comprend au moins une surface inférieure en tant que surface sur un côté inférieur dans la direction de dépôt et une surface latérale coupant la surface inférieure, et
l'unité de commande (20, 326) est configurée pour permettre à l'épaisseur de la région colorée dans la direction normale de s'écarter de l'épaisseur constante à proximité d'une région dans laquelle la surface inférieure intersecte la surface latérale, et pour amener l'unité d'éjection de matériau (12) à former une région colorée de sorte que la région colorée le long de la surface inférieure est continue à la région colorée le long de la surface latérale.

7. Procédé de construction pour construire un objet tridimensionnel (50, 310), en commandant un fonctionnement d'une unité d'éjection de matériau (12) qui éjecte un matériau utilisé pour construire l'objet (50, 310), le procédé comprenant les étapes consistant à :
amener l'unité d'éjection de matériau (12) à éjecter au moins un matériau de coloration utilisé pour colorer l'objet (50, 310) dans un cas de construction d'un objet (50, 310) qui est coloré,
dans un cas de construction de l'objet coloré (50, 310), amener l'unité d'éjection de matériau (12) à former au moins une région colorée qui est une région de couche le long d'une forme de surface de l'objet (50, 310) à construire et qui est une région colorée avec le matériau de coloration, et
amener l'unité d'éjection de matériau (12) à former la région colorée de sorte que dans la direction normale de l'objet (50, 310), qui est une direction perpendiculaire à la surface de l'objet (50, 310), la région colorée a une épaisseur constante fixée à l'avance,
**caractérisé en ce que** l'appareil de construction (10, 320) :
construit l'objet (50, 310) coloré pour inclure un texte ou un graphique dessiné avec un matériau de coloration ayant une couleur différente d'une couleur environnante sur une surface de l'objet (50, 310), et
amène l'unité d'éjection de matériau (12) à former la région colorée de sorte qu'une largeur de chaque partie du texte ou du graphique dans une direction parallèle à la surface de l'objet (50, 310) est constante à chaque position dans la direction normale dans la région colorée.

8. Procédé de construction pour construire un objet tridimensionnel (50, 310), en commandant un fonctionnement d'une unité d'éjection de matériau (12) qui éjecte un matériau utilisé pour construire l'objet (50, 310), le procédé comprenant les étapes consistant à :
amener l'unité d'éjection de matériau (12) à éjecter au moins un matériau de coloration utilisé pour colorer l'objet (50, 310) dans un cas de construction d'un objet (50, 310) qui est coloré,
dans un cas de construction de l'objet coloré (50, 310), amener l'unité d'éjection de matériau (12) à former au moins une région colorée qui est une région de couche le long d'une forme de surface de l'objet (50, 310) à construire et qui est une région colorée avec le matériau de coloration, et
amener l'unité d'éjection de matériau (12) à former la région colorée de sorte que dans la direction normale de l'objet (50, 310), qui est une direction perpendiculaire à la surface de l'objet (50, 310), la région colorée a une épaisseur constante fixée à l'avance,
**caractérisé en ce que** l'appareil de construction (10, 320) :
construit l'objet (50, 310) coloré pour inclure un texte ou un graphique dessiné avec un matériau de coloration ayant une couleur différente d'une couleur environnante sur une surface de l'objet (50, 310), et
amène l'unité d'éjection de matériau (12) à former la région colorée de sorte qu'une largeur de chaque partie du texte ou du graphique dans une direction parallèle à la surface de l'objet (50, 310) sur le côté le plus extérieur de l'objet (50, 310) est plus grande que la largeur sur le côté le plus intérieur de l'objet (50, 310).

9. Procédé de construction pour construire un objet tridimensionnel (50, 310), en commandant un fonctionnement d'une unité d'éjection de matériau (12) qui éjecte un matériau utilisé pour construire l'objet (50, 310), le procédé comprenant les étapes consistant à :
amener l'unité d'éjection de matériau (12) à éjecter au moins un matériau de coloration utilisé pour colorer l'objet (50, 310) dans un cas de construction d'un objet (50, 310) qui est coloré,
dans un cas de construction de l'objet coloré (50, 310), amener l'unité d'éjection de matériau (12) à former au moins une région colorée qui est une région de couche le long d'une forme de surface de l'objet (50, 310) à construire et qui est une région colorée avec le matériau de coloration, et
amener l'unité d'éjection de matériau (12) à former la région colorée de sorte que dans la direction normale de l'objet (50, 310), qui est une direction perpendiculaire à la surface de l'objet (50, 310), la région colorée a une épaisseur constante fixée à l'avance,
**caractérisé en ce que** l'appareil de construction (10, 320) :
construit l'objet (50, 310) coloré pour inclure un texte ou un graphique dessiné avec un matériau de coloration ayant une couleur différente d'une couleur environnante sur une surface de l'objet (50, 310), et
amène l'unité d'éjection de matériau (12) à former la région colorée de sorte qu'une largeur de chaque partie du texte ou du graphique dans une direction parallèle à la surface de l'objet (50, 310) sur le côté le plus extérieur de l'objet (50, 310) est plus petite que la largeur sur le côté le plus intérieur de l'objet (50, 310).
